(19) Europäisches Patentamt
European Patent Office
Office européen des brevets

(11) Veröffentlichungsnummer: **0 019 851**
**B1**

(12) # EUROPÄISCHE PATENTSCHRIFT

(45) Veröffentlichungstag der Patentschrift: **11.05.83**

(21) Anmeldenummer: **80102836.6**

(22) Anmeldetag: **21.05.80**

(51) Int. Cl.³: **C 09 B 56/02**, C 09 B 55/00, C 09 B 45/26, D 06 P 3/24, D 06 P 3/00, C 09 B 45/48

(54) **1:2 Chromkomplexfarbstoffe der Azomethin- und/oder Azoreihe, deren Herstellung und Verwendung beim Färben und Bedrucken von Polyamid- oder Cellulosematerialien.**

(30) Priorität: **23.05.79 CH 4839/79**
**28.04.80 CH 3265/80**

(43) Veröffentlichungstag der Anmeldung: **10.12.80 Patentblatt 80/25**

(45) Bekanntmachung des Hinweises auf die Patenterteilung: **11.05.83 Patentblatt 83/19**

(84) Benannte Vertragsstaaten: **BE CH DE FR GB IT LI**

(56) Entgegenhaltungen:
**EP A 0 009 466**
**FR A 1 203 570**

(73) Patentinhaber: **CIBA-GEIGY AG**
**Patentabteilung Postfach**
**CH-4002 Basel (CH)**

(72) Erfinder: **Beffa, Fabio, Dr.**
**Burgstrasse 38**
**CH-4125 Riehen (CH)**

(74) Vertreter: **Berg, Wilhelm, Dr. et al**
**Dr. Berg, Dipl.-Ing. Stapf, Dipl.-Ing. Schwabe, Dr. Dr. Sandmair Mauerkircherstrasse 45**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

1 : 2 Chromkomplexfarbstoffe der Azomethin- und/oder Azoreihe, deren Herstellung und Verwendung beim Färben und Bedrucken von Polyamid- oder Cellulosematerialien

Die vorliegende Anmeldung betrifft Chromkomplexfarbstoffe, die in Form der freien Säure der Formel

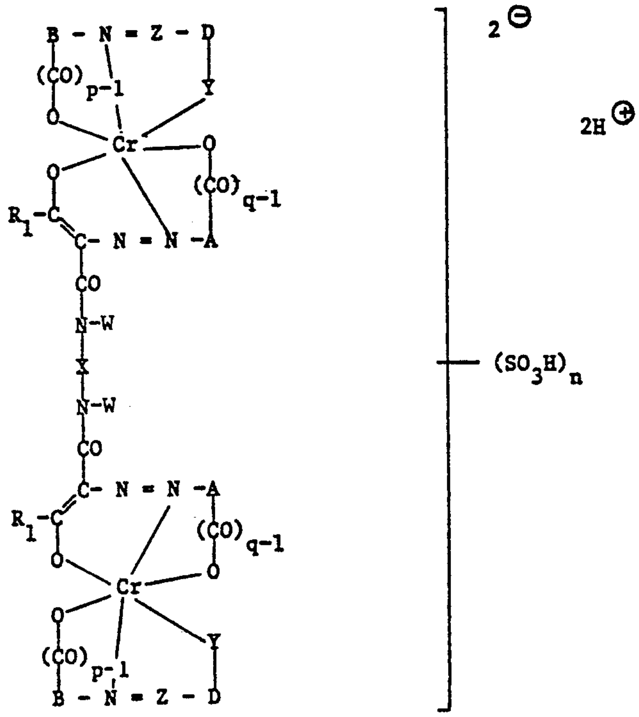

(1)

entsprechen, worin X eine direkte Bindung oder den Rest eines aliphatischen, aromatischen oder heterocyclischen Diamins, W Wasserstoff oder eine niedere Alkylgruppe, wobei die beiden Reste W auch miteinander verbunden sein können, so dass sie zusammen eine aliphatische Brücke mit 2 C-Atomen darstellen, $R_1$ je einen niedermolekularen Alkylrest, einen Arylrest oder die $CN\text{-}CH_2$-gruppe, A unabhängig voneinander einen Rest der Benzol- oder Naphthalinreihe, B unabhängig voneinander einen Rest der Benzol- oder Naphthalinreihe, Z unabhängig voneinander ein Stickstoffatom oder eine CH-Gruppe, p unabhängig voneinander 1 oder 2, q unabhängig voneinander 1 oder 2, Y unabhängig voneinander ein Sauerstoffatom oder eine Gruppe der Formel —NR—, worin R Wasserstoff oder niedrigmolekulares Alkyl bedeutet, wobei, wenn Z eine CH-Gruppe ist, Y ein Sauerstoffatom sein muss und D unabhängig voneinander den Rest eines o-Hydroxyaldehyds bedeutet, oder, wenn Z ein Stickstoffatom ist, den Rest einer in o-Stellung zu Y kuppelnden Kupplungskomponente bedeutet und n eine ganze Zahl von 1 bis 8 ist.

Es sind bereits zahlreiche 1 : 2-Chromkomplexfarbstoffe bekannt, z. B. aus den französischen Patentschriften 1.203.570, 1.442.837 und 2.270.302. Dort sind jedoch keine Verbindungen beschrieben, welche zwei 1 : 2-Chromkomplexfarbstoffe über eine organische Brücke miteinander verbunden enthalten.

Der Begriff « niedrigmolekular » bezeichnet in den Farbstoffen der obigen Formel (1) vor allem Reste mit 1 bis 5 C-Atomen.

Mit « Aryl » sind insbesondere Phenyl- und Naphthylreste gemeint die gegebenenfalls substituiert sein können, z. B. durch Chlor, Methyl, Methoxy, Nitro oder Sulfo.

Das Brückenglied X kann sich von den verschiedensten Diaminen ableiten. Es bedeutet z. B. einen aliphatischen Rest mit 2 bis 6 C-Atomen, wie z. B. einen Alkylen- oder Cycloalkylenrest oder einen gegebenenfalls substituierten Alkenylenrest, einen Rest der Benzol- oder Naphthalinreihe oder einen Rest der Formel

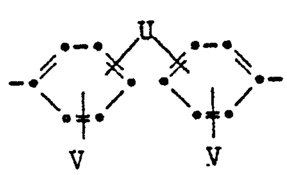

(2)

worin U eine direkte Bindung, eine gegebenenfalls substituierte Methylenbrücke oder eine Brücke der

Formel —O—, —S—, —NR'—, —SO—, —$SO_2$—, —CO—, —CO—CO—, —CO—NH, —NH—CO—NH—, —NH—CS—NH—, —$SO_2$—NH—, —$SO_2$—NH—$SO'_2$—, —N = N—, —$CH_2$—$CH_2$— oder —CH = CH— ist, wobei R' Wasserstoff oder niedrigmolekulares Alkyl bedeutet und V unabhängig voneinander je Wasserstoff oder einen Substituenten bedeutet. Als substituierte Methylenbrücken seien genannt :

$-C(CH_3)_2-$,

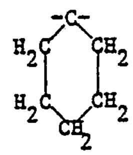 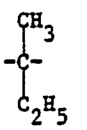 oder 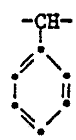

Als Rest V kommen ausser Wasserstoff vor allem die Sulfo- und Carboxygruppe, Halogen, insbesondere Chlor, sowie niedrigmolekulares Alkyl und Alkoxy in Betracht.

Die Reste A und B können eine oder mehrere Sulfogruppen tragen und ausserdem weitersubstituiert sein, z. B. mit niedrigmolekularem Alkyl, Alkoxy, Sulfonamido-, N-mono- oder N,N-di-substituierten Sulfonamidogruppen und Sulfongruppen, Chlor, Brom, Nitro, Cyano, Arylazo, insbesondere Phenylazo, Sulfophenylazo oder Sulfonaphthylazo und Arylazoarylenazo, wie Sulfophenylazophenylenazo oder Sulfonaphthylazophenylenazo. Als Sulfongruppen kommen vor allem niedrigmolekulare, gegebenenfalls z. B. mit Chlor oder Hydroxy substituierte Alkylsulfonylreste in Betracht und die Substituenten der Sulfonamidgruppen sind vorzugsweise ebenfalls niedrigmolekulare, gegebenenfalls mit z. B. Hydroxy substituierte Alkylreste. Der Rest —D—Y— leitet sich vor allem von folgenden Kupplungskomponenten ab :

Phenole, Naphthole, Naphthylamine, Pyrazolone, Pyrazolimine, Pyridone sowie Acetessigsäureamide, insbesondere -anilide, sowie Barbitursäurederivate und Hydroxychinoline.

Insbesondere betrifft die Anmeldung Verbindungen der Formel (1), worin Y ein Sauerstoffatom oder die NH-Gruppe und Z ein Stickstoffatom ist.

Wegen ihrer guten Zugänglichkeit werden des weiteren diejenigen Farbstoffe bevorzugt, worin die Reste $R_1$ je eine Methylgruppe bedeuten.

Von besonderem Interesse sind Chromkomplexfarbstoffe die in Form der freien Säure der Formel

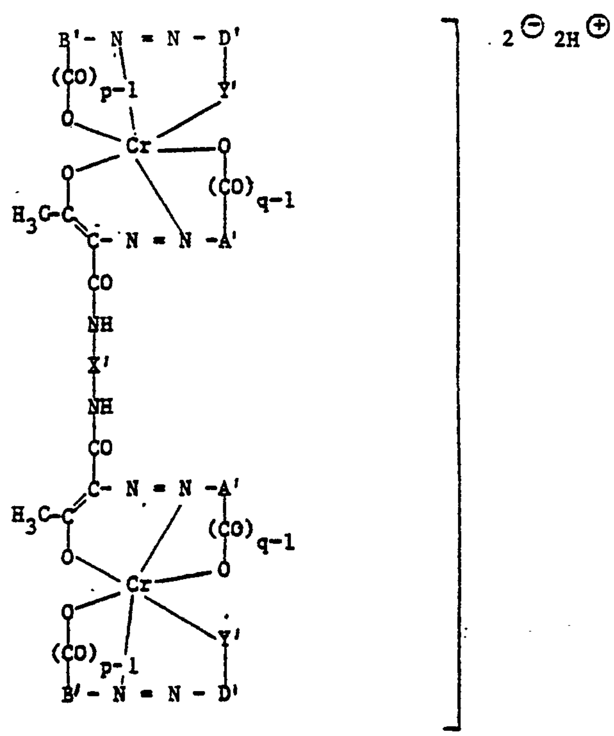

(3)

entsprechen, worin X' ein niedrigmolekularer Alkylenrest, ein gegebenenfalls mit Chlor, Nitro, Sulfo, niedrigmolekularem Alkyl oder Alkoxy substituierter Phenylen- oder Naphthylenrest oder ein Rest der Formel

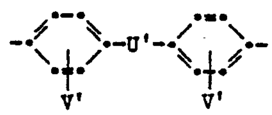

(4)

ist, worin U' eine direkte Bindung oder ein Brückenglied der Formel

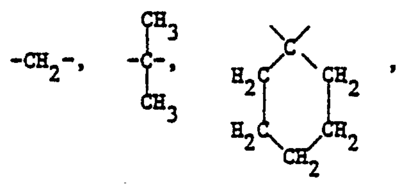

—CH = CH—, —$SO_2$—, —O— oder —$SO_2$—NH—$SO_2$— und V' unabhängig voneinander je Wasserstoff, die Sulfogruppe, Chlor, Methyl oder Methoxy bedeutet, Y' unabhängig voneinander ein Sauerstoffatom oder die NH-Gruppe, p und q unabhängig voneinander je 1 oder 2, A' und B' unabhängig voneinander je ein gegebenenfalls mit Sulfo-, Alkyl- oder Alkoxygruppen, Chlor, Nitro oder Cyano substituierter Phenyl- oder Naphthylrest und D' unabhängig voneinander ein gegebenenfalls mit Hydroxy, Alkyl oder Alkoxy substituierter Phenylrest, ein gegebenenfalls mit Amino, Acylamino oder Sulfo substituierter Naphthylrest, der Rest eines 1-Aryl-3-methylpyrazol-5-ons oder der Rest eines Acetessigsäureanilids ist, wobei die beiden letztgenannten Reste mit Sulfo, Nitro, Chlor, Brom, Alkyl oder Alkoxy substituiert sein können.

Mit « Alkyl » und « Alkoxy » sind hierbei niedrigmolekulare Reste gemeint. Mit « Acylamino » werden niedrigmolekulare Alkanoylamino-, Alkylsulfonylamino- und Alkoxycarbonylaminoreste sowie Aroylamino- und Arylsulfonylaminoreste bezeichnet und der Begriff « Aryl » umfasst vor allem Naphthyl, mit 1 bis 3 Sulfogruppen substituiertes Naphthyl sowie insbesondere Phenyl und mit Chlor, Brom, Methyl, Aethyl, Methoxy, Nitro oder Sulfo substituiertes Phenyl.

Von den Chromkomplexfarbstoffen der Formel (3) sind diejenigen besonders bevorzugt, bei denen X' der Rest eines gegebenenfalls mit Sulfo, Methyl oder Methoxy substituierten Phenylendiamins oder ein Rest der Formel (4) ist, worin V' je Wasserstoff oder eine Sulfogruppe bedeuten und U' eine direkte Bindung oder eine Brücke der Formel —$CH_2$—, —$C(CH_3)_2$—,

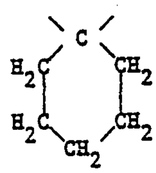

,

—CH = CH—, —$SO_2$—, —O— oder —$SO_2$—NH—$SO_2$— ist.

Ausserdem sind solche Chromkomplexfarbstoffe der Formel (3) besonders bevorzugt, worin A' und B' unabhängig voneinander mit Nitro oder Sulfo oder Nitro und Sulfo substituiertes Phenyl oder Naphthyl bedeutet.

Die neuen Verbindungen werden hergestellt, indem man einen Farbstoff der Formel

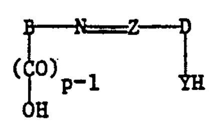

oder

(5)

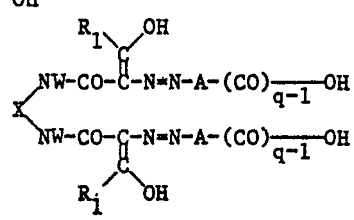

(6)

worin X, W, $R_1$, A, B, D, Z, Y, p und q dasselbe wie in Formel (1) bedeuten, mit einem chromabgebenden Mittel zum 1 : 1-Chromkomplex, bzw. im Falle der Formel (6) zum 2 Atome Chrom pro Molekül

enthaltenden Chromkomplex umsetzt und diesen anschliessend mit dem nicht metallisierten Farbstoff der Formel (6) oder (5) umsetzt, wobei man die Ausgangsverbindungen so wählt, dass der Chromkomplex 1 bis 8 Sulfogruppen enthält.

Vorzugsweise stellt man zuerst den 1 : 1-Chromkomplex des Farbstoffes der Formel (5) her und setzt diesen mit der Verbindung der Formel (6) im Verhältnis 2 : 1 um.

Die Ausgangsfarbstoffe der Formel (5) werden in üblicher Weise hergestellt. Sofern Z ein Stickstoffatom ist, wird ein Amin der Formel

$$HO—(CO)——B—NH_2/p - 1 \qquad (9)$$

diazotiert und auf eine Kupplungskomponente der Formel

$$H—D—YH \qquad (10)$$

gekuppelt.

Geeignete Diazokomponenten der Formel (9) sind z. B. : Anthranilsäure, 4- oder 5-Sulfo- und 4- oder 5-Sulfonamidoanthranilsäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl- und 5-benzylsulfon, 2-Amino-1-hydroxybenzol-4-methyl-, -äthyl-, chlormethyl- und butylsulfon, 5-Nitro- und 6-Nitro-2-amino-1-hydroxy-benzol-4-methylsulfon, 2-Amino-1-hydroxybenzol-4- oder -5-sulfamid, -sulf-N-methyl- und -sulf-N-β-hydroxyäthylamid, 2-Amino-1-hydroxybenzo-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol,4,6-Dinitro-2-amino-1-hydroxybenzol, 4-Nitro-2-amino-1-hydroxybenzol-6-sulfonsäureamid, 2-Amino-1-hydroxybenzol-4- oder -5-sulfanthranilid, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 4-Chlor-2-amino-1-hydroxybenzol-6-sulfosäure, 1-Amino-2-hydroxy-naphthalin-4-sulfosäure, 1-Amino-2-hydroxy-6-nitronaphthalin-4-sulfosäure, 4-(4′ -oder 3′-Sulfophenylazo)-2-amino-1-hydroxybenzol, 4-(3′-Sulfonamidophenylazo)-2-amino-1-hydroxybenzol, 4-(4′-Phenylazophenylenazo)-2-amino-1-hydroxybenzol, 2-Amino-1-hydroxybenzol-4,6-disulfosäure.

Statt der oben genannten Amine der Formel (9) kommen als Diazokomponenten auch entsprechende Methoxyverbindungen in Betracht, wie Anisidin, 4- oder 5-Chloranisidin, 4- oder 5-Nitroanisidin oder Anisidin-4- oder 5-Sulfosäure, wobei die Methoxygruppe bei der Chromierung in eine OH-Gruppe umgewandelt wird.

Von besonderem Interesse sind die Verbindungen, worin B bzw. B′ ein nitro- und/oder sulfogruppenhaltiger Phenyl- oder Naphthylrest ist.

Der Rest D bzw. D′ leitet sich besonders von folgenden Gruppen von Kupplungskomponenten ab :

Naphthole, die gegebenenfalls mit Chlor, Acylamino-, Amino-, Sulfo-, Sulfonamido-, N-mono- oder N,N-disubstituierten Sulfonamidogruppen und Sulfongruppen substituiert sind, wobei diese Gruppen dieselben Bedeutungen haben, die vorne angegeben worden sind.

Naphthylamine, die gegebenenfalls mit Sulfo-, Sulfonamido-, mono- oder disubstituierten Sulfonamido- oder Sulfongruppen substituiert sind.

5-Pyrazolone oder 5-Aminopyrazole, die in 1-Stellung vorzugsweise einen gegebenenfalls mit Chlor, Nitro, niedrigmolekularen Alkyl- und Alkoxygruppen, Sulfonamido-, N-alkylierten Sulfonamidgruppen, Sulfon- oder insbesondere Sulfogruppen substituierten Phenyl- oder Naphthylrest besitzen.

Acetessigsäureanilide und Benzoylessigsäureanilide, die im Anilidkern gegebenenfalls mit Chlor, Brom, niedrigmolekularen Alkyl-, Alkoxy-, Sulfon-, Sulfonamido-, N-mono- oder N,N-disubstituierten Sulfonamidogruppen und Sulfogruppen substituiert sein können.

Phenole, die mit niedrigmolekularen Acylaminogruppen und/oder mit vorzugsweise 1 bis 5 Kohlenstoffatomen enthaltenden Alkylgruppen substituiert sind und in o-Stellung kuppeln.

2,6-Dihydroxy-3-cyano- oder carbonamido-4-alkylpyridine und 6-Hydroxy-2-pyridone, die in 1-Stellung durch niedrigmolekulares, gegebenenfalls substituiertes Alkyl, z. B. Methyl, Isopropyl, β-Hydroxyäthyl, β-Aminoäthyl oder γ-Isopropoxypropyl substituiert sind, in 3-Stellung eine Cyano- oder Carbonamidogruppe und in 4-Stellung eine niedrigmolekulare Alkylgruppe, insbesondere Methyl tragen.

Barbitursäure und an den Stickstoffatomen mit niedrigmolekularem Alkyl oder Aryl, insbesondere Phenyl substituierte Barbitursäuren.

Dihydroxychinoline

Beispiele solcher Kupplungskomponenten sind :

2-Naphthol, 1,3- oder 1,5-Dihydroxynaphthalin, 2-Naphthol-6-sulfonamid, 2-Naphthol-6-β-hydroxyäthylsulfon, 1-Naphthol, 1-Acetylamino-7-naphthol, 1-Propionylamino-7-naphthol, 1-Carbomethoxyamino-7-naphthol, 1-Carboäthoxy-amino-7-naphthol, 1-Carbopropoxyamino-7-naphthol, 1-Dimethylaminosulfonyl-amino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 4-Methyl-1-naphthol, 4-Methoxy-1-naphthol, 4-Acetyl-1-naphthol,

1-Naphthol-3-, -4- oder -5-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 2-Naphtylamin-1-sulfosäure, 1-Naphthyl amin-4- oder -5-sulfosäure, 2-Aminonaphthalin-7-sulfosäure, 1-Naphthylamin-4-sulfonamid, 2-Aminonaphthalin-6-sulfonamid, 2-Phenylaminonaphthalin, 2-(3'-Chlorphenyl)-aminonaphthalin, 2-Aminonaphthalin-6-sulfonsäure-N-methylamid oder -6-sulfosäure, 1,3-Dimethylpyrazol-5-on, 3-Methylpyrazol-5-on, 1-Phenyl-3-methylpyrazol-5-on, 1-Phenyl-5- pyrazolon-3-carbonsäureamid, 1-(2'-, 3'- oder 4'-Methylphenyl)-3-methylpyrazol-5-on, 1-[3'- oder 4'-(β-Hydroxyäthylsulfonyl)-phenyl]-3-methylpyrazol-5-on, 1-(2', 3'- oder 4'-Sulfophenyl)-3-methylpyrazol-5-on, 1-(2'-Chlor-5'-sulfophenyl)-3-methylpyrazol-5-on, 1-(2'-oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2', 5'- oder 3', 4'-Dichlorphenyl)-3-methylpyrazol-5-on, 1-(2'-, 3'- oder 4'-Sulfamoylphenyl)-3-methylpyrazol-5-on, 1-(2', 5'-Dichlor-4'-sulfophenyl)-3-methylpyrazol-5-on, 1-(2'-, 3'- oder 4'-Methylsulfonylphenyl)-3-methylpyrazol-5-on, 1-(2'-, 3'- oder 4'-Sulfophenyl)-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluid, Acetoacet-o-chloranilid, Acetoacet anilid-3- oder 4-sulfonamid, Acetoacet-m-xylidid, Tetralol, 4-Methylphenol, 3-Dialkylaminophenol, besonders 3-Dimethylamino- und 3-Diäthylaminophenol, 4-Butylphenol, 4-Amylphenol, insbesondere 4-t-Amylphenol, 2-Isopropyl-4-methylphenol, 2- oder 3-Acetylamino-4-methylphenol, 2-Methoxycarbonyl-amino-4-methylphenol, 2-Aethoxycarbonylamino-4-methylphenol und 3,4-Dimethylphenol, Resorcin, 2,6-Dihydroxy-3-cyano-4-methylpyridin, 1-Methyl-3-cyano-4-äthyl-6-hydroxypyridon, 1-Amino-3-cyano-4-methyl-6-hydroxypyridon, 1-Phenyl-3-carbonamido-4-methyl-6-hydroxypyridon, Barbitursäure, 2,4-Dihydroxychinolin.

Vorzugsweise ist D bzw. D' ein gegebenenfalls mit Sulfo oder Amino und Sulfo substituierter Naphthylrest oder ein gegebenenfalls mit niedrigmolekularem Alkyl substituierter Phenylrest oder der Rest eines 1-Phenyl- oder 1-Sulfophenyl-3-methyl-pyrazol-5-ons.

Sofern Z eine —CH-Gruppe ist, wird ein Amin der Formel (9) mit einem o-Hydroxybenzaldehyd oder o-Hydroxynaphthaldehyd umgesetzt. Geeignete Aldehyde sind beispielsweise :

2-Hydroxy-1-naphthaldehyd, 1-Hydroxy-2-naphthaldehyd, 2-Hydroxybenzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, sowie die davon ableitbaren, mit Arylazo oder Arylazoarylenazo substitierten Aldehyde.

Die Verbindungen der Formel (6) werden nach an sich bekannten Methoden erhalten, indem man z. B. an einem Diamin der Formel

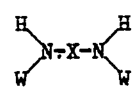

(11)

beide Aminogruppen mit Diketen oder einem Ketoester biskondensiert und auf das so erhaltene Zwischenprodukt 2 Aequivalente eines diazotierten Amins der Formel

$$HO—(CO)——A—NH_2/q - 1 \quad (12)$$

kuppelt.

Als Amine der Formel (12) kommen hierbei die gleichen Verbindungen wie als Amine der Formel (9) in Betracht.

Geeignete Diamine der Formel (11) sind z. B. Hydrazin, N,N'-Dimethylhydrazin, Aethylendiamin, Propylendiamin, 1,4-Diaminocyclohexan, Diaminomalonitril, Piperazin, 1,5-Naphthylendiamin, m- oder p-Phenylendiamin, 1,4-Phenylendiamin-2-sulfosäure, 1,3-Phenylendiamin-4-sulfosäure, 4-Methyl- oder 4-Methoxy-1,3-phenylendiamin, 2-Methoxy- oder 2-Nitro-1,4-phenylendiamin, 4,4'-Diaminodiphenyl, 2,2'-Diaminodiphenyl-4,4'-disulfosäure, 4,4'-Diaminodiphenyl-3-sulfosäure, 4,4'-Diaminodiphenyl-2,2'- oder 3,3'-disulfosäure, 4,4'-Diamino-3,3'-dimethoxydiphenyl, 4,4'-Diamino-3,3'- oder 2,2'-dimethyldiphenyl, 3,3'- oder 4,4'-Diaminodiphenylsulfon, 4,4'-Diaminobenzophenon, 4,4'-Diaminodiphenyläther, 4,4'-Diaminodiphenylsulfid, 4,4'-Diaminodiphenylsulfoxyd, 4,4'-Diaminodiphenyl-2-sulfosäure, 4,4'-Diaminobenzil, 3,3'- oder 4,4'-Diaminobenzanilid, 3,3'-Diaminobenzanilid-4-sulfosäure, 4,4'-Diaminobenzanilid-3-sulfosäure, 3,3'- oder 4,4'-Diaminodiphenylharnstoff, 4,4'-Diaminodiphenylharnstoff-3,3'-disulfosäure, 4,4'-Diaminodiphenylthioharnstoff, 4,4'-Diaminobenzol-sulfanilid, 3,3'- oder 4,4'-Diaminodiphenyldisulfimid, 4,4'-Dichlor-3,3'-diaminodiphenyldisulfimid, 4,4'-Diaminoazobenzol, 4,4'-Diaminostilben-2,2'-disulfosäure, 4,4'-Diamino-diphenylmethan, 4,4'-Diamino-3,3'-dimethyl-diphenylmethan, 3,3'-Diamino-4,4'-dimethyldiphenylmethan, 4,4'-Diaminotriphenylmethan, 4,4'-Diaminodiphenyläthan, 4,4'-Diamino-3,3'-dimethyl-bis phenyläthan, 2,2-Bis-(4'-aminophenyl)-propan, 1,1-Bis-(4'-aminophenyl)-cyclohexan und 1,1-Bis-(4'-amino-3'-methyl-phenyl)-cyclohexan.

Vorzugsweise werden die Ausgangsprodukte so gewählt, dass der fertige Komplex 2 bis 6 Sulfogruppen enthält.

Die Herstellung des 1 : 1-Chromkomplexes der Verbindung der Formel (5) bzw. (6) erfolgt nach üblichen, an sich bekannten Methoden, z. B. indem man in saurem Medium mit einem einfachen oder komplexen Salz des dreiwertigen Chroms, wie Chromformiat, Chromsulfat, Chromchloridhexahydrat oder Chromfluorid, bei Siedetemperatur oder gegebenenfalls bei 100 °C übersteigenden Temperaturen umsetzt. Dreiwertiges Chrom kann auch im Reaktionsgemisch aus Chrom-VI-Verbindungen, z. B. Chromat, erzeugt werden, wenn man gleichzeitig ein Reduktionsmittel zugibt. Die Metallisierung kann in wässerigen, organisch-wässerigen oder in rein organischen Lösungsmitteln, wie Alkoholen oder Ketonen durchgeführt werden, gegebenenfalls unter Zusatz von lösungsvermittelnden oder chromierungsbeschleunigenden Substanzen, wie z. B. Komplexbildnern.

Die Umsetzung des 1 : 1-Chromkomplexes des Farbstoffes der Formel (5) bzw. (6) mit dem metallfreien Farbstoff der Formel (6) bzw. (5) erfolgt zweckmässig in neutralem bis schwach alkalischem Medium, in offenem oder geschlossenem Gefäss, bei erhöhter Temperatur, z. B. bei Temperaturen zwischen 50 und 120 °C. Man kann in organischen Lösungsmitteln, z. B. Alkoholen oder Ketonen arbeiten oder in wässeriger Lösung, wobei Zusätze von Lösungsmitteln, wie z. B. von Alkoholen, Formamid etc., gegebenenfalls die Umsetzung fördern können. Es empfiehlt sich im allgemeinen möglichst stöchiometrische Mengen des chromhaltigen 1 : 1-Komplexes und des metallfreien Farbstoffes miteinander umzusetzen. Ein Ueberschuss an metallhaltigem Farbstoff wirkt sich in der Regel weniger nachteilig aus als ein solcher an metallfreiem Farbstoff.

Statt eines einheitlichen 1 : 1-Chromkomplexes kann auch ein Gemisch verschiedener Chromkomplexe eingesetzt werden.

Die nach den obigen Verfahren erhältlichen, neuen chromhaltigen Mischkomplexe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedensten natürlichen oder synthetischen Polyamidmaterialien, wie Wolle, Seide, synthetische Polyamidfasern, Polyurethane, insbesondere aber zum Färben von Leder. Je nach Konstitution eignen sie sich auch für das Färben von cellulosehaltigen Materialien, wie z. B. Baumwolle und Papier.

Die neuen Farbstoffe sind farbstark und decken gut. Sie haben ein gutes Ziehvermögen bei gleichzeitig guten Echtheiten wie Wasch-, Wasser-, Schweiss-, Reib-, Diffusions-, Licht-, Säure- und Alkaliechtheit. Besondere Erwähnung verdient das gute Aufbauvermögen auf diversen Ledersorten, sowohl auf reinchrom wie auch auf mit vegetabilen oder synthetischen Gerbstoffen nachgegerbtem Leder. Man erhält kräftigere gelborange bis braune und olive Nuancen.

In den nachfolgenden Beispielen bedeuten die Teile, sofern nichts anderes angegeben wird, Gewichtsteile und die Prozente Gewichtsprozente. Die Temperaturen sind in Grad Celsius angegeben.

(Siehe das Beispiel 1, Seite 8)

Beispiel 1

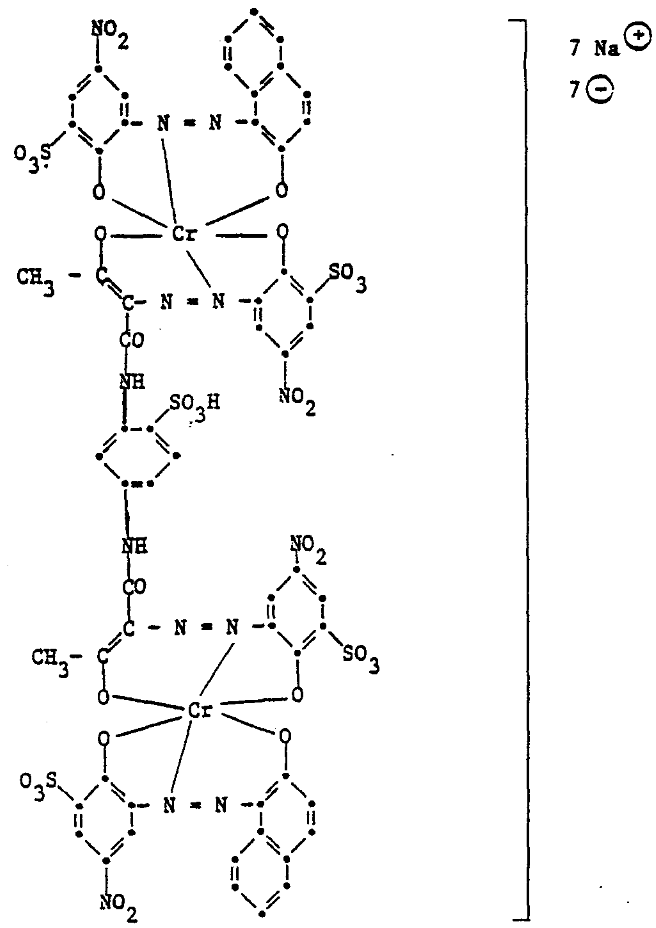

In 1 000 Volumenteilen Wasser suspendiert man 43,9 Teile der komplexen Chromverbindung vom Typus 1 Atom Chrom : 1 Molekül Farbstoff welche 5,2 Teile Chrom und 38,9 Teilen Monoazofarbstoff aus diazotierter 4-Nitro-2-amino-1-hydroxybenzol-6-sulfonsäure und 2-Hydroxynaphtalin entspricht, mit 42,3 Teilen des Biskupplungsprodukts aus diazotierter 4-Nitro-2-amino-1-hydroxybenzol-6-Sulfonsäure und 1,3-Bisacetoacetylaminobenzol-4-Sulfonsäure (erhalten durch Einwirkung von Diketen auf 1,3-Diaminobenzol-4-sulfonsäure).

Man erhitzt das Gemisch auf 80° bis 85° und erhöht gleichzeitig den pH-Wert der Suspension auf 7 bis 7,5 durch Zugabe von 5n Natronlauge und hält es solange bei dieser Temperatur und konstantem pH-Wert durch weitere Zugabe von 5n Natronlauge, bis die Ausgangsprodukte verschwunden sind. Der neue, chromhaltige Farbstoff wird durch Eindampfen bzw. Sprühtrocknung isoliert. Nach dem Trocknen stellt er ein dunkles Pulver dar, das sich in Wasser mit brauner Farbe löst und Leder in braunen Tönen färbt.

(Siehe das Beispiel 2, Seite 9)

Beispiel 2

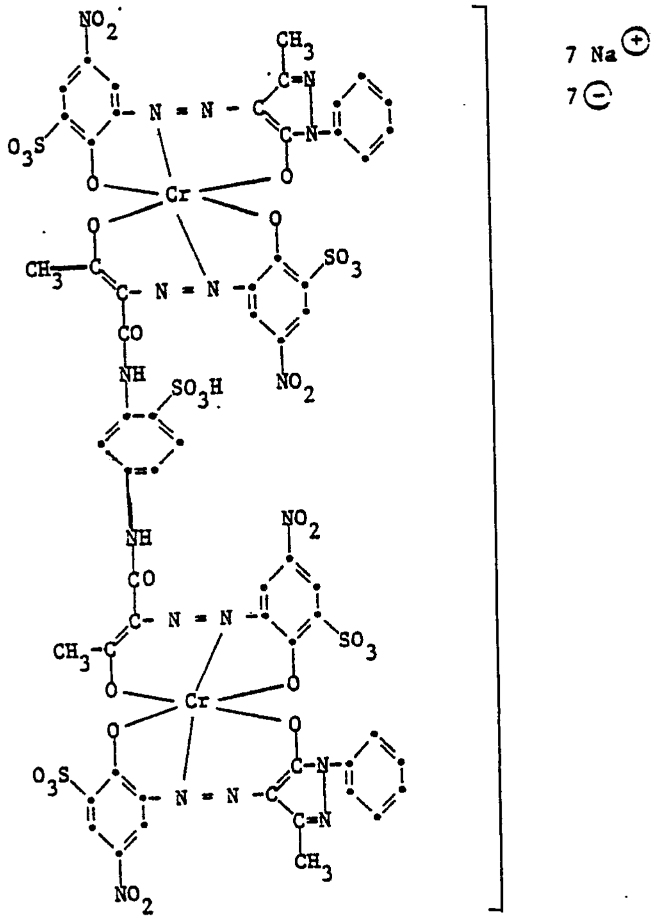

In 1 000 Volumenteilen Wasser suspendiert man 46,9 Teile der komplexen Chromverbindung vom Typus 1 Atom Chrom : 1 Molekül Farbstoff, welche 5,2 Teilen Chrom und 41,9 Teilen Monoazofarbstoff aus diazotierter 4-Nitro-2-amino-1-hydroxybenzol-6-Sulfonsäure und 1-Phenyl-3-methyl-5-pyrazolon entspricht, mit 42,3 Teilen des Biskupplungsproduktes aus diazotierter 4-Nitro-2-amino-1-hydroxybenzol-6-sulfonsäure und 1,3-Bisacetoacetylaminobenzol-4-sulfonsäure (erhalten durch Einwirkung von Diketen auf 1,3-Diaminobenzol-4-sulfonsäure). Man erhitzt das Gemisch auf 80° bis 85° und erhöht gleichzeitig den pH-Wert der Suspension auf 7 bis 7,5 durch Zugabe von 5n Natronlauge und hält es solange bei dieser Temperatur und konstantem pH-Wert durch weitere Zugabe von 5n Natronlauge, bis die Ausgangsprodukte verschwunden sind. Der neue, chromhaltige Farbstoff wird durch Eindampfen bzw. Sprühtrocknung isoliert. Nach dem Trocknen stellt er ein dunkles Pulver dar, das sich in Wasser mit oranger Farbe löst und Leder in orangen Tönen färbt.

(Siehe das Beispiel 3, Seite 10)

Beispiel 3

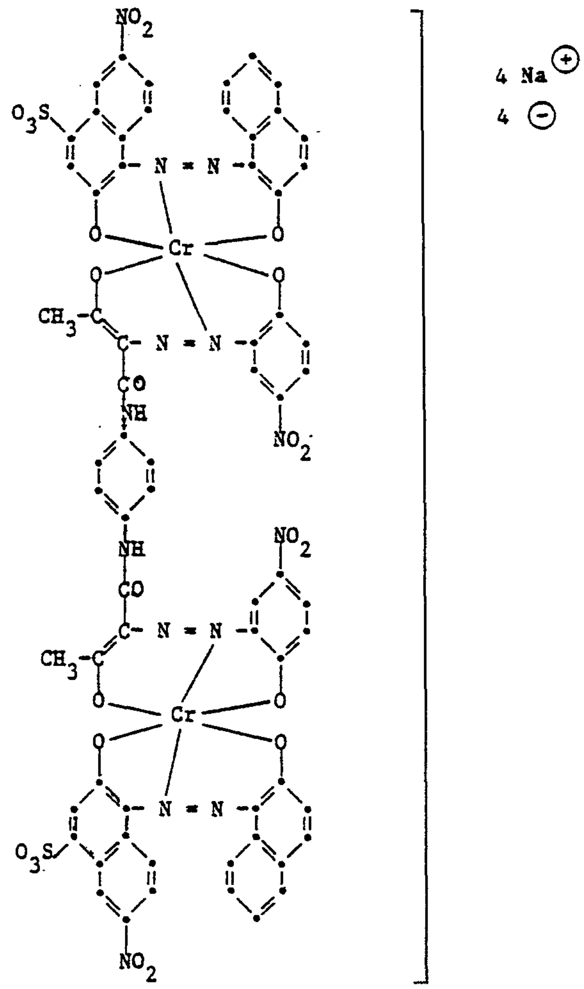

In 750 Volumenteilen Aethylenglykol suspendiert man 48,9 Teile der komplexen Chromverbindung vom Typus 1 Atom Chrom : 1 Molekül Farbstoff, welche 5,2 Teilen Chrom und 43,9 Teilen Monoazofarbstoff aus diazotierter 6-Nitro-1-amino-2-hydroxynaphtalin-4-sulfonsäure und 2-Hydroxynaphtalin entspricht, mit 30,3 Teilen des Kupplungsproduktes aus diazotiertem 4-Nitro-2-amino-1-hydroxybenzol und 1,4-Bisacetoacetylaminobenzol (erhalten durch Einwirkung von Diketen auf 1,4-Diaminobenzol). Man erhitzt das Gemisch auf 80° bis 85° und erhöht gleichzeitig den pH-Wert der Suspension auf 7 bis 7,5 durch Zugabe von 5n Natronlauge und hält es solange bei dieser Temperatur und konstantem pH-Wert durch weitere Zugabe von 5n Natronlauge, bis die Ausgangsprodukte verschwunden sind.

Der neue, chromhaltige Farbstoff wird durch Zugabe von Natriumchloridlösung ausgefällt ; man filtriert ihn ab und trocknet ihn. Nach dem Trocknen stellt er ein dunkles Pulver dar, das sich in Wasser mit brauner Farbe löst und Leder aus schwach saurem Bade in braunen, echten Tönen färbt.

(Siehe das Beispiel 4, Seite 11)

Beispiel 4

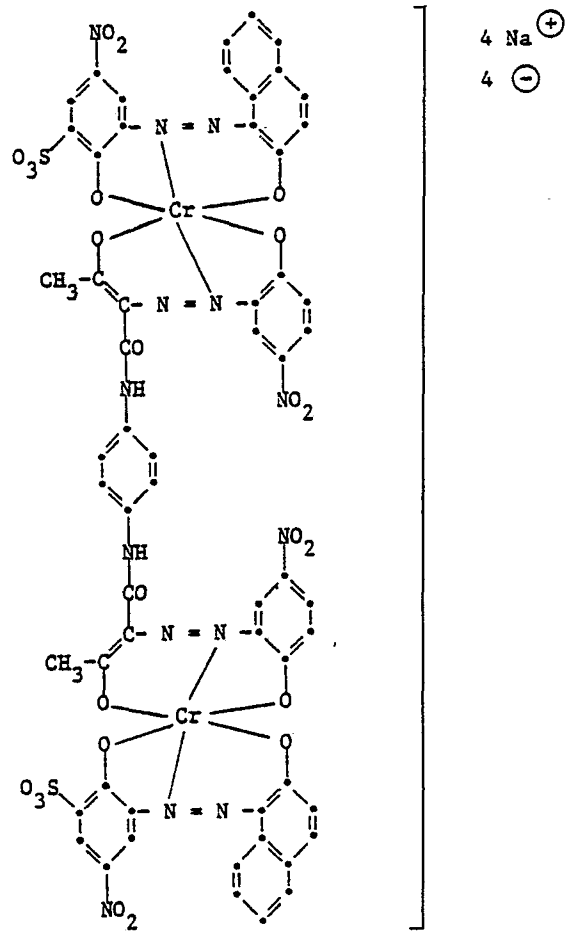

In 750 Volumenteilen Aethylenglykol suspendiert man 43,9 Teile der komplexen Chromverbindung vom Typus 1 Atom Chrom : 1 Molekül Farbstoff, welche 5,2 Teilen Chrom und 38,9 Teilen Monoazofarbstoff aus diazotierter 4-Nitro-2-amino-1-hydroxybenzol-6-sulfonsäure und 2-Hydroxynaphtalin entspricht, mit 30,3 Teilen des Biskupplungsproduktes aus diazotiertem 4-Nitro-2-amino-1-hydroxybenzol und 1,4-Bisacetoacetylaminobenzol (erhalten durch Einwirkung von Diketen auf 1,4-Diaminobenzol). Man erhitzt das Gemisch auf 80° bis 85° und erhöht gleichzeitig den pH-Wert der Suspension auf 7 bis 7,5 durch Zugabe von 5n Natronlauge und hält es solange bei dieser Temperatur und konstantem pH-Wert durch weitere Zugabe von 5n Natronlauge, bis die Ausgangsprodukte verschwunden sind.

Der neue, chromhaltige Farbstoff wird durch Zugabe von Natriumchloridlösung ausgefällt; man filtriert ihn ab und trocknet ihn.

Nach dem Trocknen stellt er ein dunkles Pulver dar, das sich in Wasser mit brauner Farbe löst und Leder aus schwach saurem Bade in braunen, echten Tönen färbt.

Farbstoffe mit ähnlichen Eigenschaften erhält man, wenn man den 1 : 1 -Chromkomplex der in Kol. III der folgenden Tabelle genannten Verbindung im Verhältnis 2 : 1 mit dem Kupplungsprodukt aus 2 Aequivalenten der in Kol. II genannten Diazokomponenten und einem Aequivalent der in Kol. I aufgeführten Kupplungskomponente umsetzt. Diese färben Leder in den in Kol. IV angegebenen Tönen.

(Siehe die Tabellen, Seiten 12 bis 49)

| No. | I | II | III | IV |
|---|---|---|---|---|
| 1. | 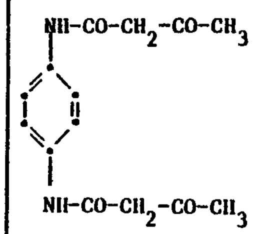 | 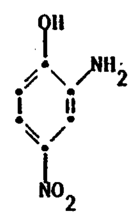 | 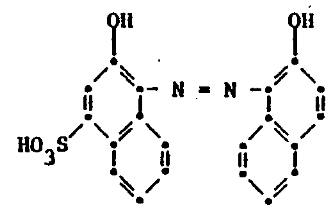 | Braun |
| 2. | do | do | 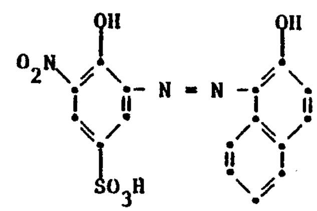 | Braun |
| 3. | do | do | 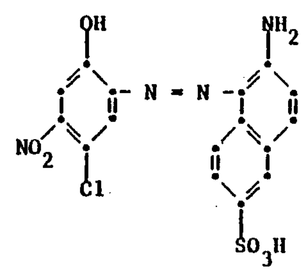 | Olive |

| No. | I | II | III | IV |
|---|---|---|---|---|
| 4. | 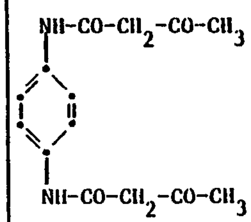 | 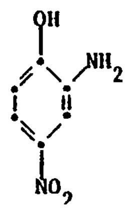 | 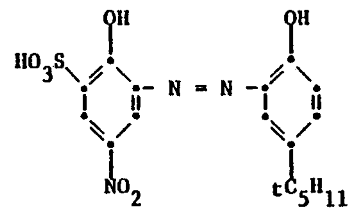 | Braun |
| 5. | do | do | 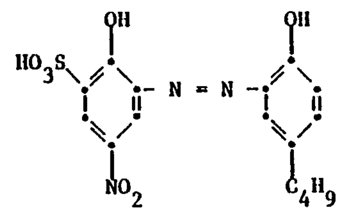 | Braun |
| 6. | do | do | 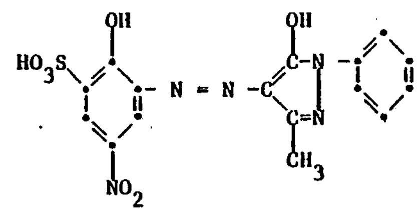 | Orange |

| No. | I | II | III | IV |
|---|---|---|---|---|
| 7. | 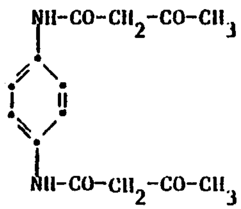 | 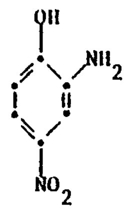 | 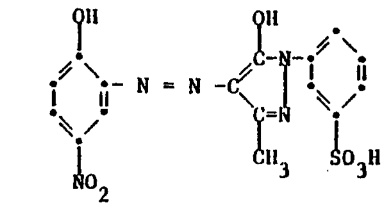 | Orange |
| 8. | do | do | 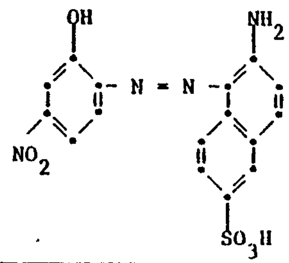 | Olive |
| 9. | do | do | 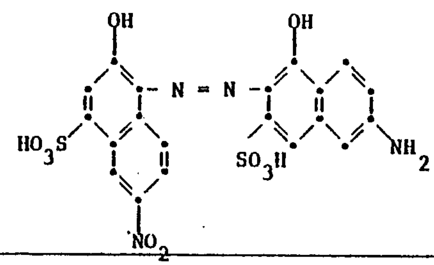 | Schwarz-Olive |

| No. | I | II | III | IV |
|---|---|---|---|---|
| 10. | 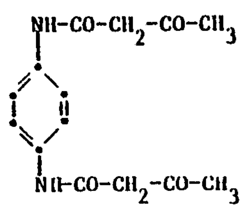 | 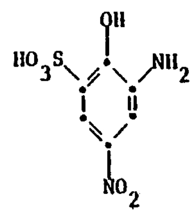 | 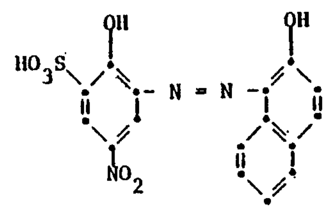 | Braun |
| 11. | do | do | 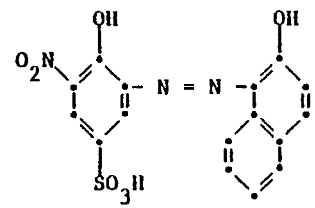 | Braun |
| 12. | do | do | 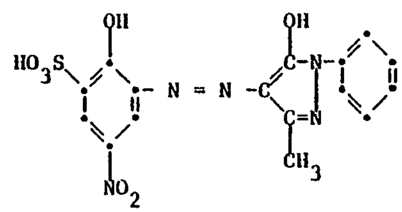 | Orange |

| No. | I | II | III | IV |
|---|---|---|---|---|
| 13. | 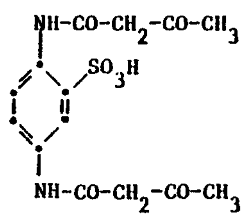 | 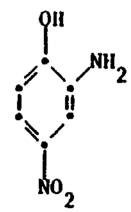 | 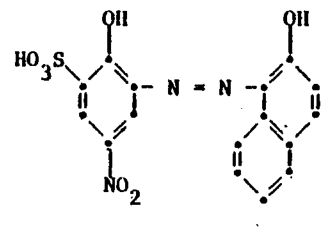 | Braun |
| 14. | do | do | 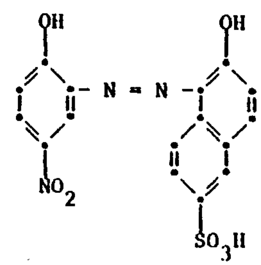 | Braun |
| 15. | do | do | 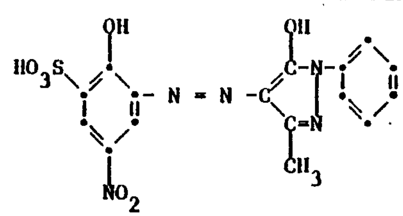 | Orange |

| No. | I | II | III | IV |
|---|---|---|---|---|
| 16. | 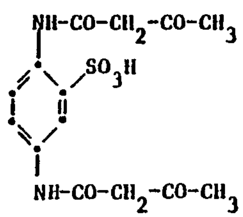 | 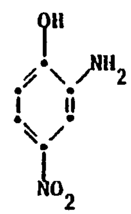 | 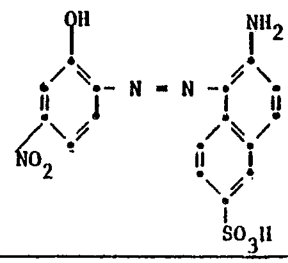 | Olive |
| 17. | do | do | 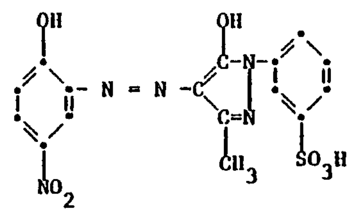 | Orange |
| 18. | do | do | 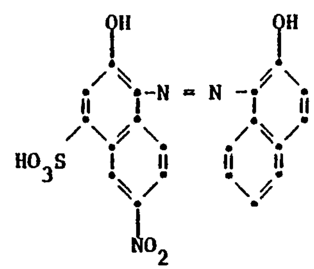 | Braun |

| No. | I | II | III | IV |
|---|---|---|---|---|
| 19. | 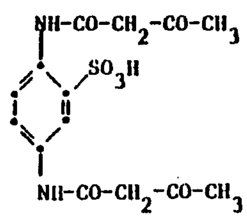 | 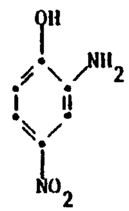 | 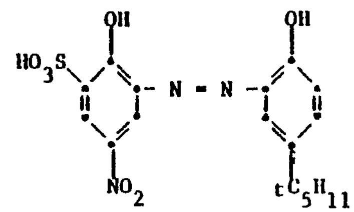 | Braun |
| 20. | 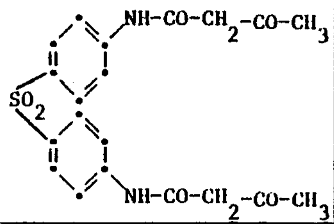 | 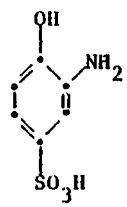 | 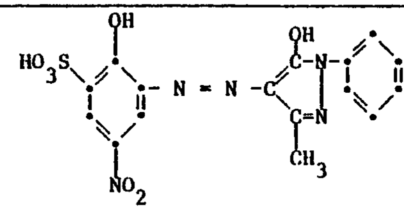 | Orange |
| 21. | do | 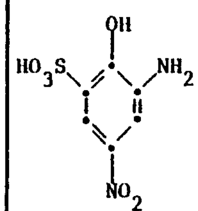 | 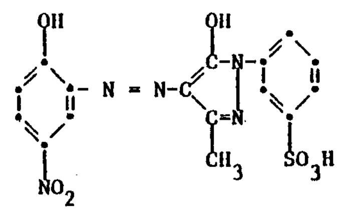 | Orange |

| No. | I | II | III | IV |
|---|---|---|---|---|
| 22. | 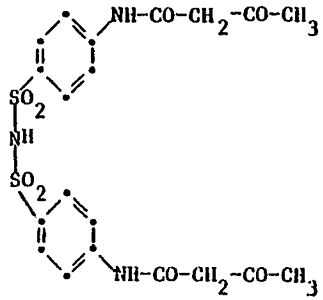 | 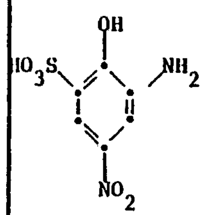 | 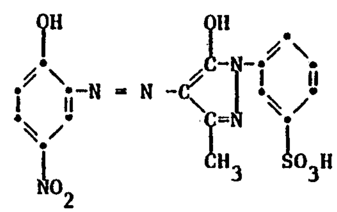 | Orange |
| 23. | do | do | 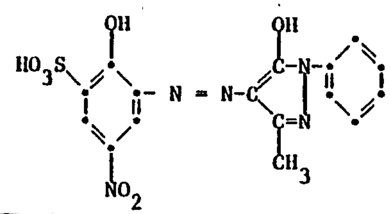 | Orange |
| 24. | 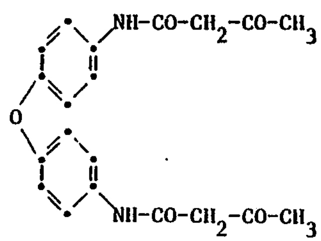 | do | do | Orange |

| No. | I | II | III | IV |
|---|---|---|---|---|
| 25. | 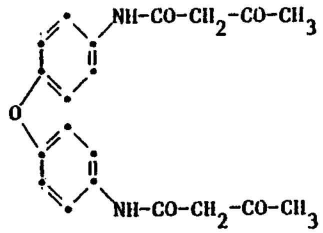 | 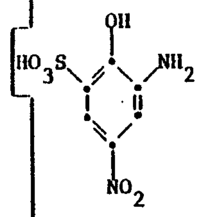 | 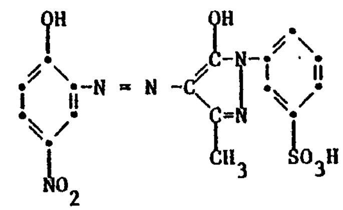 | Orange |
| 26. | 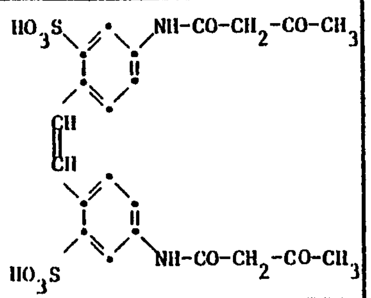 | 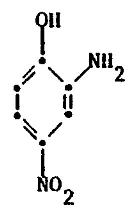 | 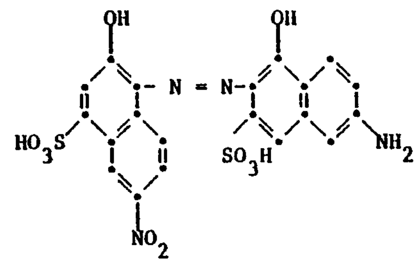 | Olive |
| 27. | do | do | 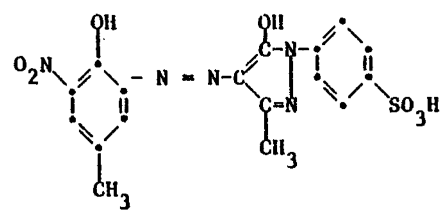 | Rot-Orange |

| No. | I | II | III | IV |
|---|---|---|---|---|
| 28. | 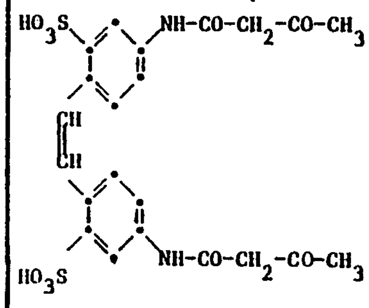 | 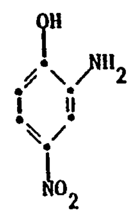 | 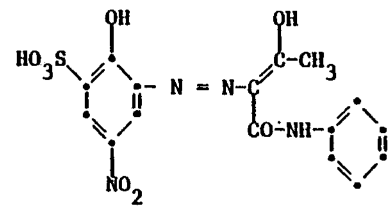 | Braungelb |
| 29. | do | do | 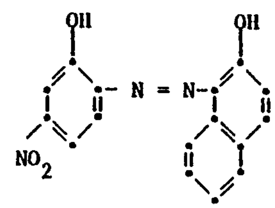 | Olive |
| 30. | do | do | 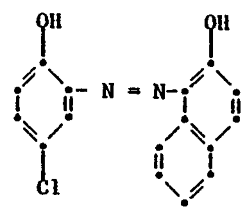 | Braun |

| No. | I | II | III | IV |
|---|---|---|---|---|
| 31. | 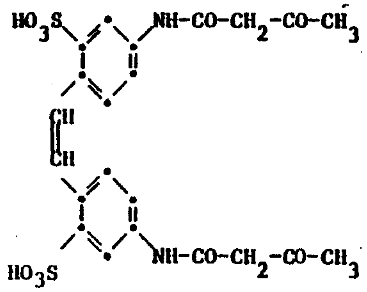 | 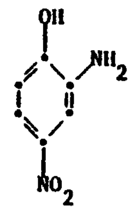 | 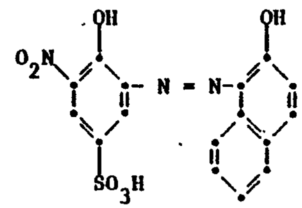 | Braun |
| 32. | do | do | 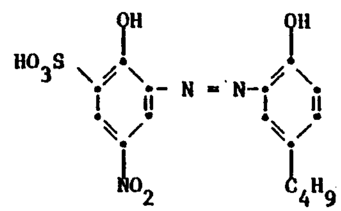 | Hellbraun |
| 33. | do | do | 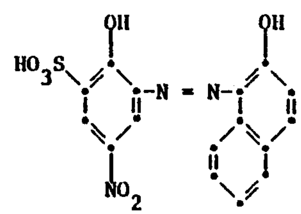 | Braun |

| No. | I | II | III | IV |
|---|---|---|---|---|
| 34. | 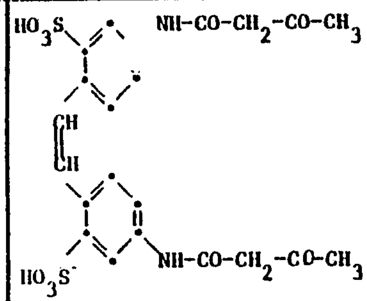 | 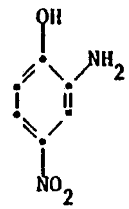 | 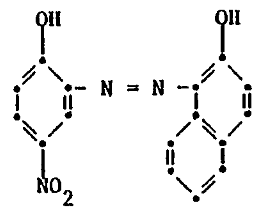 | Braun |
| 35. | do | do | 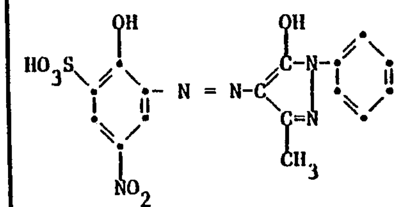 | Orange |
| 36. | do | do | 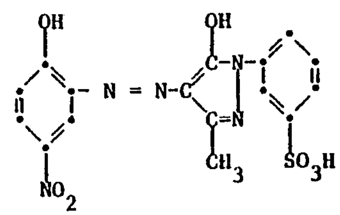 | Braun-stichig-Orange |

| No. | I | II | III | IV |
|---|---|---|---|---|
| 37. | 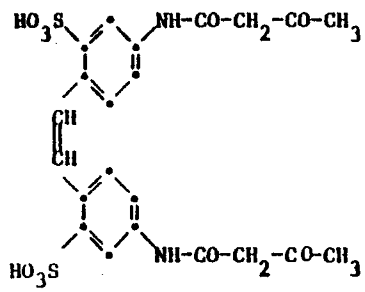 | 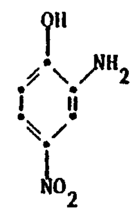 | 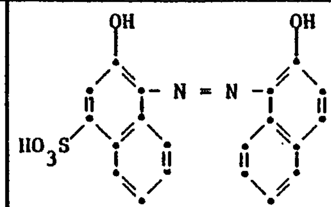 | Olive |
| 38. | do | do | 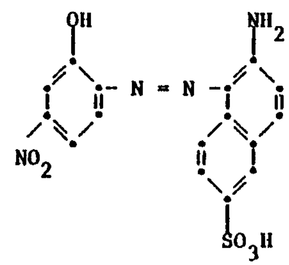 | Olive |

| No. | I | II | III | IV |
|---|---|---|---|---|
| 39. | 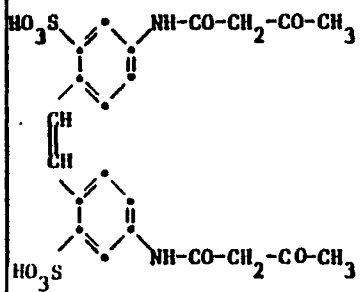 | 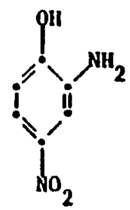 | 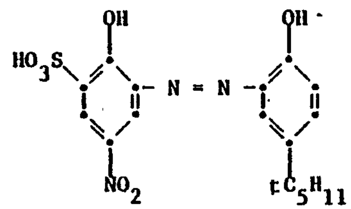 | Hellbraun |
| 40. | do | do | 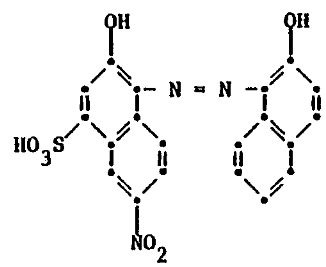 | Olive-braun |

| No. | I | II | III | IV |
|---|---|---|---|---|
| 41 | 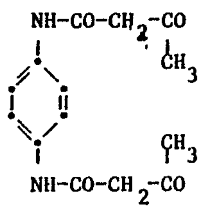 | 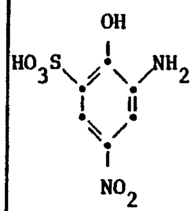 | 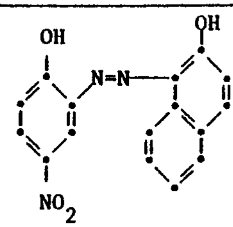 | Braun |
| 42 | do | do | 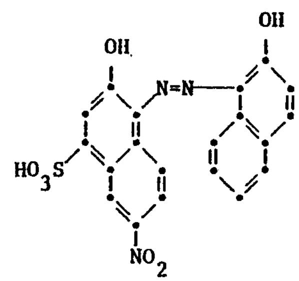 | Dunkelbraun |
| 43 | do | do | 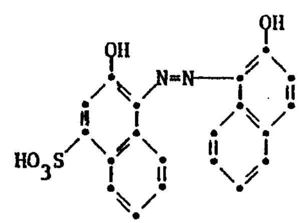 | Braun |

| No. | I | II | III | IV |
|---|---|---|---|---|
| 44 | 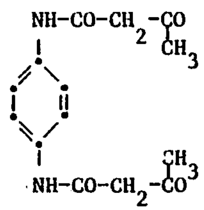 | 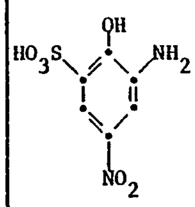 | 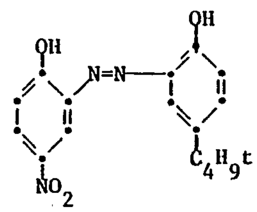 | Braun |
| 45 | do | do | 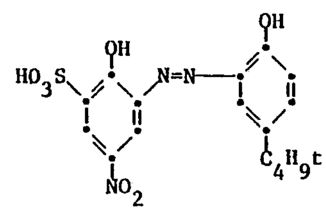 | Braun |
| 46 | do | do | 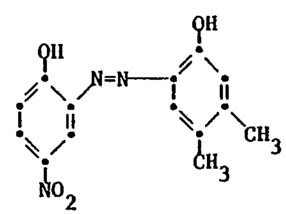 | Braun |

| No. | I | II | III | IV |
|---|---|---|---|---|
| 47 | 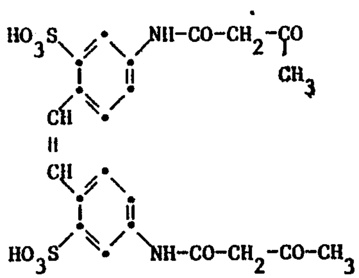 | 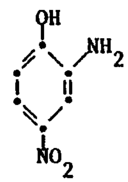 | 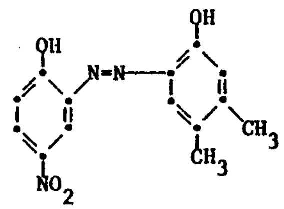 | Braun |
| 48 | 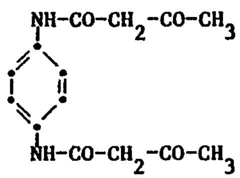 | 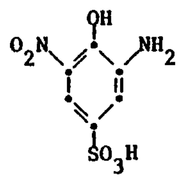 | 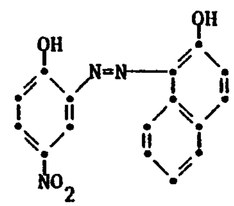 | Violettstichig-braun |
| 49 | do | do | 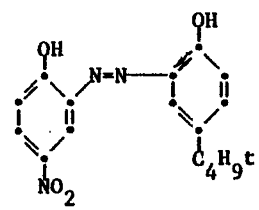 | Rotstichig-braun |

| No. | I | II | III | IV |
|---|---|---|---|---|
| 50 | 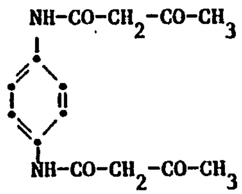 | 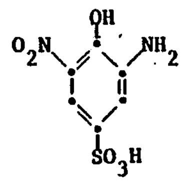 | 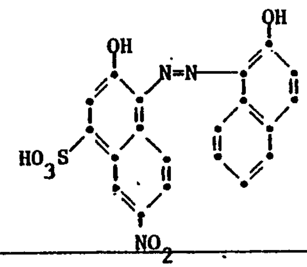 | Braun |
| 51 | do | do | 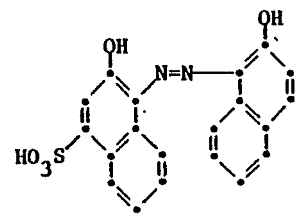 | Violettstichig-braun |
| 52 | do | do | 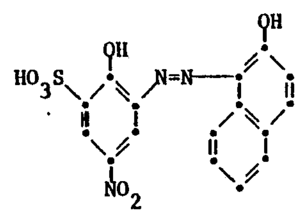 | Braun |

| No. | I | II | III | IV |
|---|---|---|---|---|
| 53 | 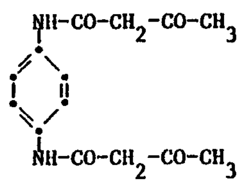 | 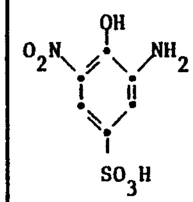 | 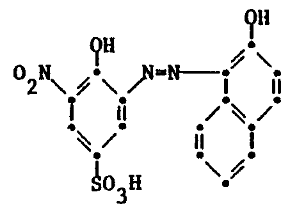 | Violettstichig-braun |
| 54 | do | do | 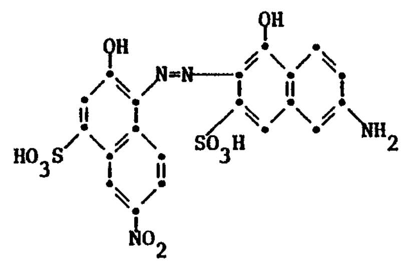 | Schwarz |
| 55 | do | do | 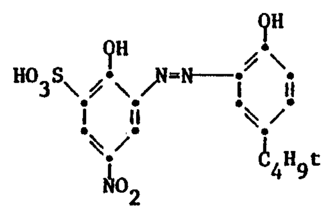 | Rotstichig-braun |

| No. | I | II | III | IV |
|---|---|---|---|---|
| 56 | 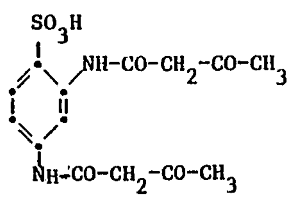 | 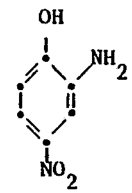 | 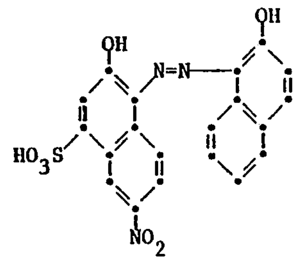 | Olivebraun |
| 57 | do | do | 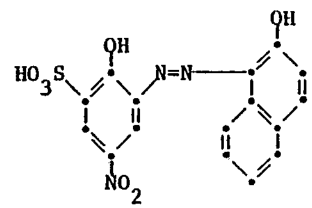 | Braun |
| 58 | do | do | 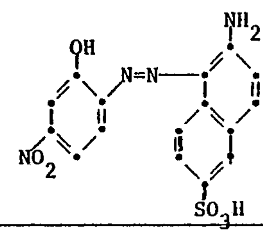 | Olive |

| No. | I | II | III | IV |
|---|---|---|---|---|
| 59 | 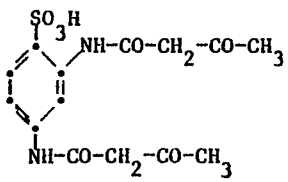 | 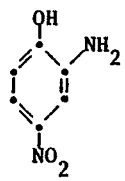 | 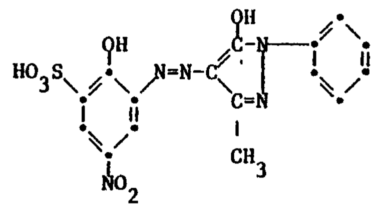 | Orange |
| 60 | do | do | 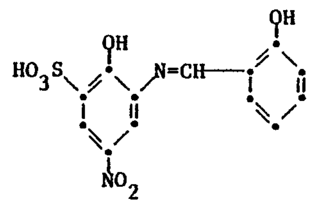 | Orangegelb |
| 61 | do | 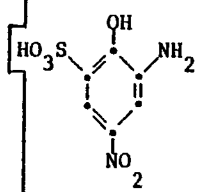 | do | Orangegelb |

| No. | I | II | III | IV |
|---|---|---|---|---|
| 62 | 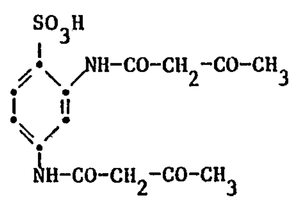 | 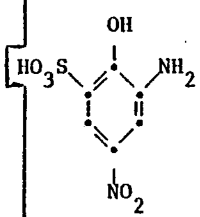 | 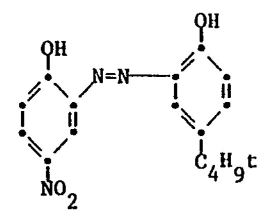 | Braun |
| 63 | do | 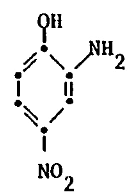 | 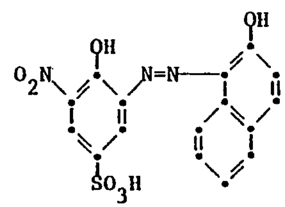 | Olivestichig-braun |
| 64 | do | do | 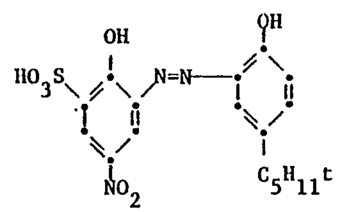 | Braun |

| No. | I | II | III | IV |
|---|---|---|---|---|
| 65 | 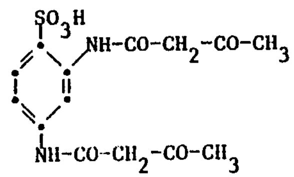 | 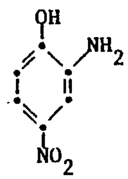 | 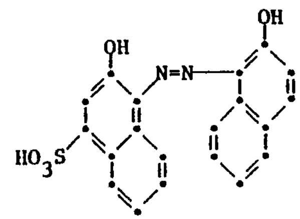 | Braunolive |
| 66 | do | do | 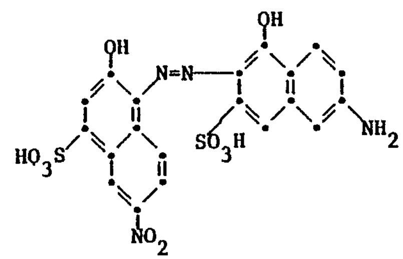 | Olive |
| 67 | do | do | 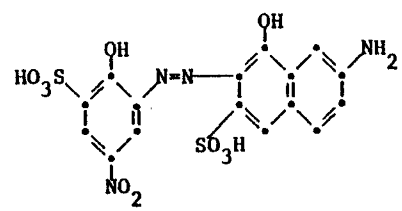 | Oliveschwarz |

| No. | I | II | III | IV |
|---|---|---|---|---|
| 68 | 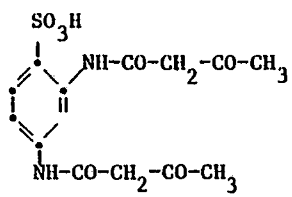 | 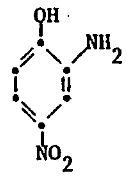 | 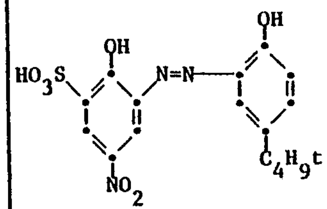 | Braun |
| 69 | 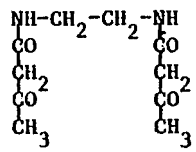 | do | 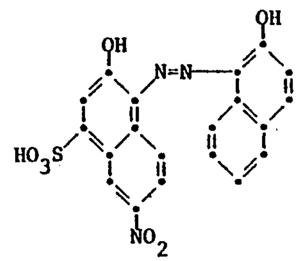 | Schwarz-olive |
| 70 | 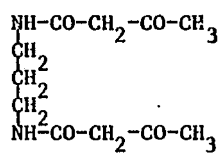 | do | do | Schwarz-olive |

| No. | I | II | III | IV |
|---|---|---|---|---|
| 71 | $NH-CO-CH_2-CO-CH_3$<br>$CH_2$<br>$CH_2$<br>$CH_2$<br>$NH-CO-CH_2-CO-CH_3$ | 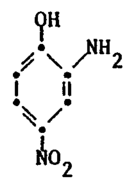 | 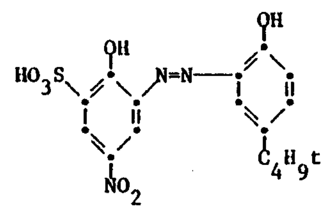 | Braun |
| 72 | do | do | 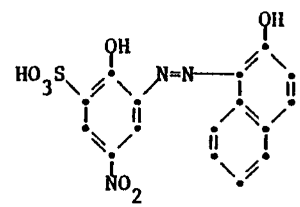 | Braun |
| 73 | $NH-CO-CH_2-CO-CH_3$<br>$CH_2$<br>$CH_2$<br>$NH-CO-CH_2-CO-CH_3$ | do | do | Braun |

| No. | I | II | III | IV |
|---|---|---|---|---|
| 74 | $NH-CO-CH_2-CO-CH_3$<br>\|<br>$CH_2$<br>\|<br>$CH_2$<br>\|<br>$NH-CO-CH_2-CO-CH_3$ | 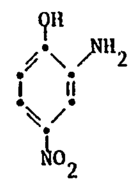 | 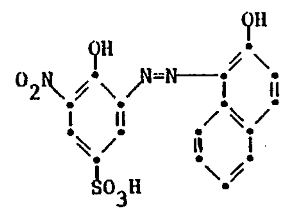 | Braun schwarz |
| 75 | do | do | 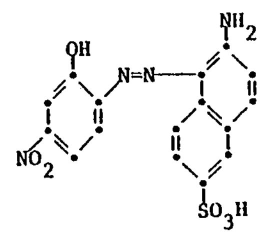 | Olive |
| 76 | do | do | 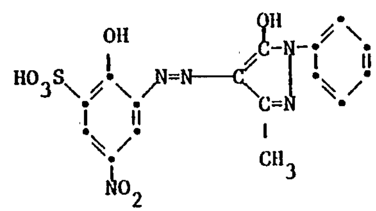 | Orange |

| No. | I | II | III | IV |
| --- | --- | --- | --- | --- |
| 77 | $NH-CO-CH_2-CO-CH_3$<br>$CH_2$<br>$CH_2$<br>$NH-CO-CH_2-CO-CH_3$ | 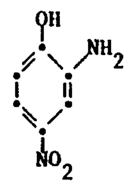 | 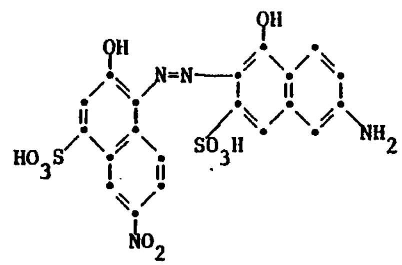 | Grünstichig-schwarz |
| 78 | do | do | 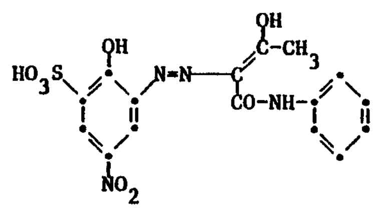 | Gelb |

| No. | I | II | III | IV |
|---|---|---|---|---|
| 79 | $NH-CO-CH_2-CO-CH_3$<br>I<br>$CH_2$<br>I<br>$CH_2$<br>I<br>$NH-CO-CH_2-CO-CH_3$ | 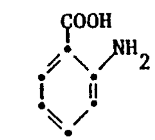 | 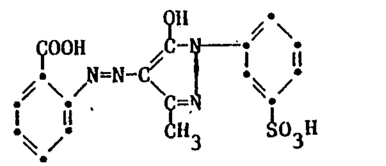 | Gelb |
| 80 | do | do | 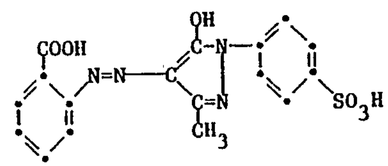 | Gelb |
| 81 | do | 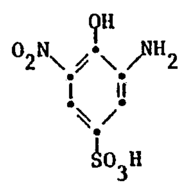 | 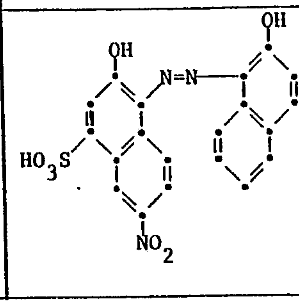 | Graustichig-braun |

| No. | I | II | III | IV |
|---|---|---|---|---|
| 82 | $NH-CO-CH_2-CO-CH_3$<br>\|<br>$CH_2$<br>\|<br>$CH_2$<br>\|<br>$NH-CO-CH_2-CO-CH_3$ | 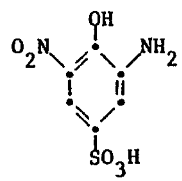 | 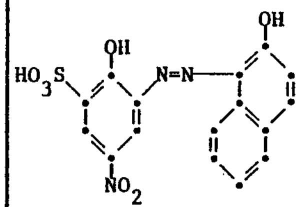 | Braun |
| 83 | do | do | 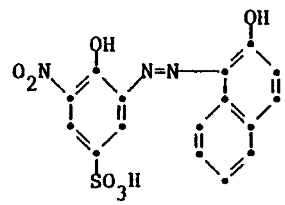 | Graustichig-braun |
| 84 | do | do | 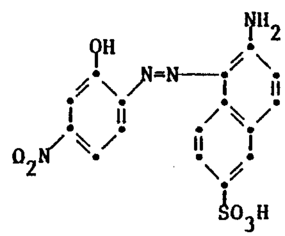 | Grünstichig-olive |

| No. | I | II | III | IV |
|---|---|---|---|---|
| 85 | $NH-CO-CH_2-CO-CH_3$<br>\|<br>$CH_2$<br>\|<br>$CH_2$<br>\|<br>$NH-CO-CH_2-CO-CH_3$ | 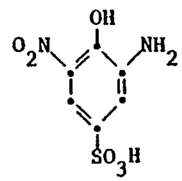 | 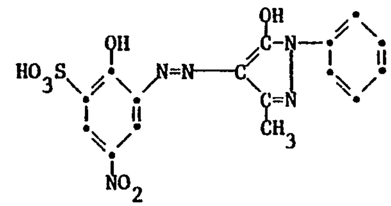 | Orange |
| 86 | do | do | 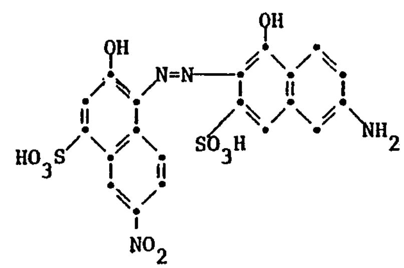 | Grauschwarz |
| 87 | do | do | 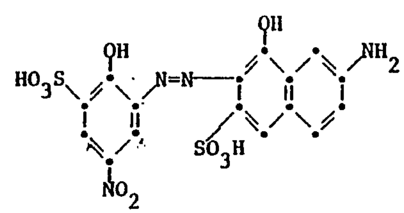 | Graustichig-braun |

| No. | I | II | III | IV |
|---|---|---|---|---|
| 88 | 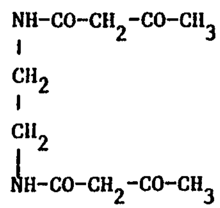 | 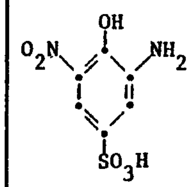 | 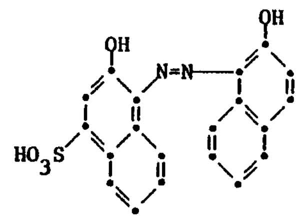 | Dunkelbraun |
| 89 | do | do | 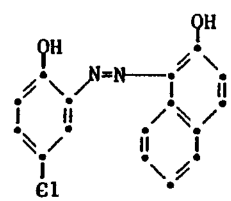 | Violettstichig-dunkelbraun |
| 90 | do | do | 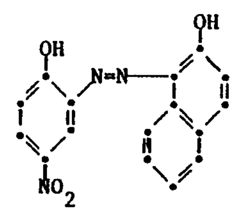 | Braun |

| No. | I | II | III | IV |
|---|---|---|---|---|
| 91 | 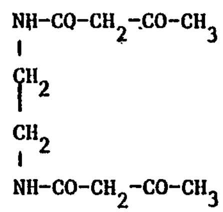 | 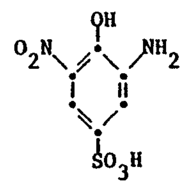 | 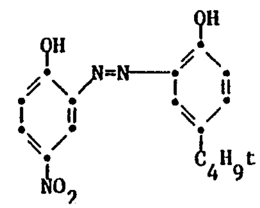 | Braun |
| 92 | do | do | 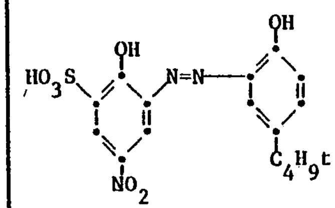 | Braun |
| 93 | do | do | 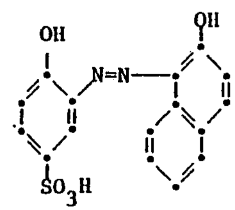 | Violettstichig-braun |

| No. | I | II | III | IV |
|---|---|---|---|---|
| 94 | $NH-CO-CH_2-CO-CH_3$<br>$CH_2$<br>$CH_2$<br>$NH-CO-CH_2-CO-CH_3$ | 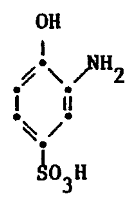 | 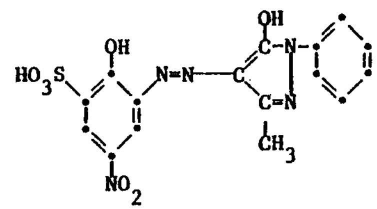 | Orange |
| 95 | 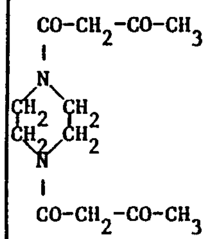 | 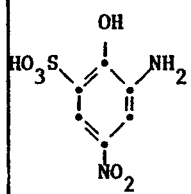 | 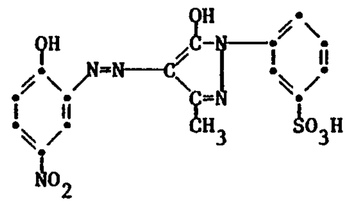 | Orange |
| 96 | do | do | 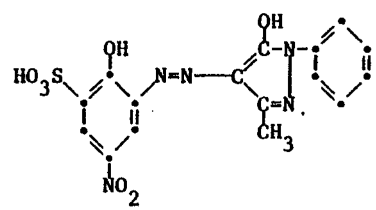 | Orange |

| No. | I | II | III | IV |
|---|---|---|---|---|
| 97 | 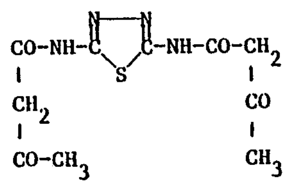 | 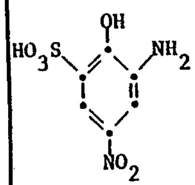 | 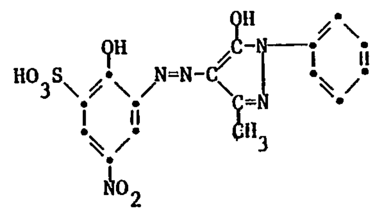 | Orange |
| 98 | do | do | 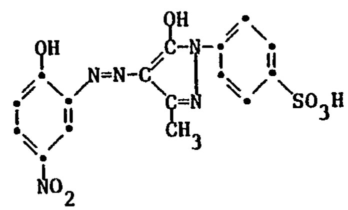 | Orange |
| 99 | 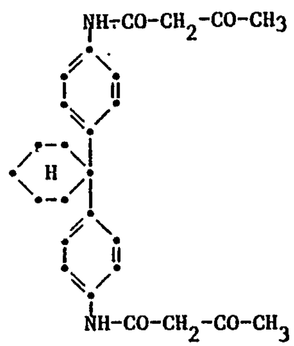 | do | 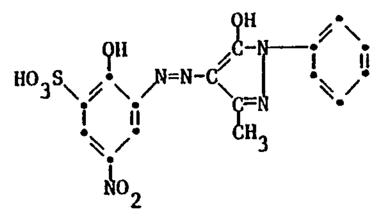 | Orange |

| No. | I | II | III | IV |
|---|---|---|---|---|
| 100 | 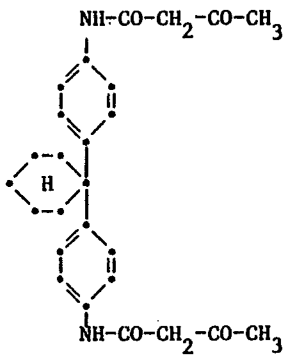 | 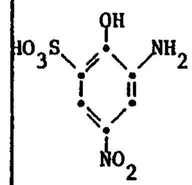 | 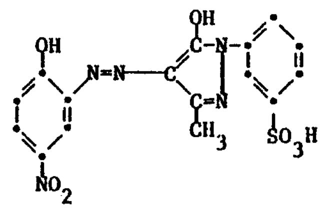 | Orange |
| 101 | $NH-CO-CH_2-CO-CH_3$<br>$CH_2$<br>$CH_2$<br>$NH-CO-CH_2-CO-CH_3$ | do | 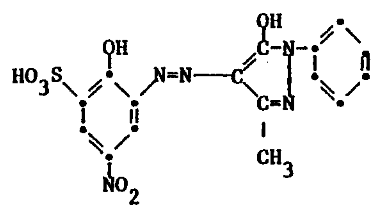 | Orange |
| 102 | do | do | 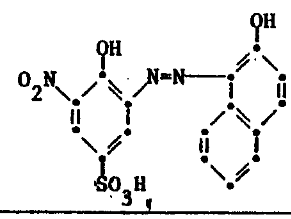 | Olive |

| No. | I | II | III | IV |
| --- | --- | --- | --- | --- |
| 103 | $NH-CO-CH_2-CO-CH_3$<br>\|<br>$CH_2$<br>\|<br>$CH_2$<br>\|<br>$NH-CO-CH_2-CO-CH_3$ | 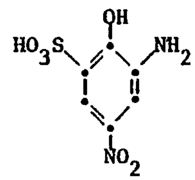 | 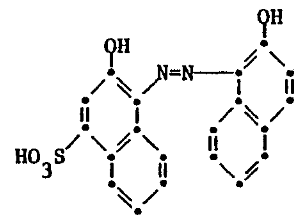 | Olive |
| 104 | do | do | 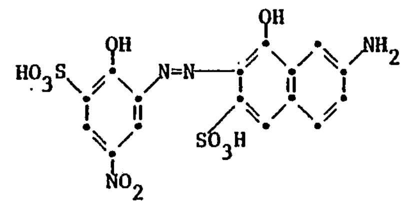 | Olive |
| 105 | do | do | 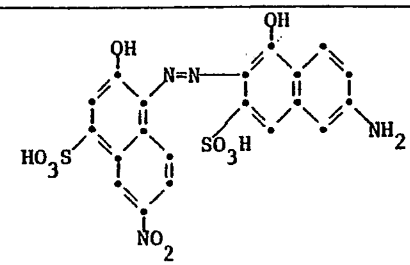 | Grünolive |

| No. | I | II | III | IV |
|---|---|---|---|---|
| 106 | $NH-CO-CH_2-CO-CH_3$<br>\|<br>$CH_2$<br>\|<br>$CH_2$<br>\|<br>$NH-CO-CH_2-CO-CH_3$ | 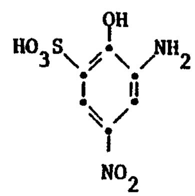 | 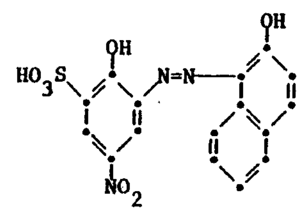 | Braunstichig-oliv |
| 107 | do | do | 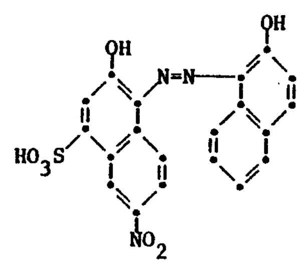 | Olive |
| 108 | do | do | 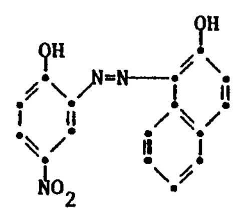 | Braun |

| No. | I | II | III | IV |
|---|---|---|---|---|
| 109 | 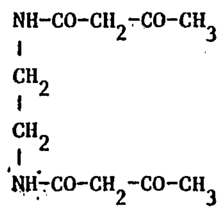 | 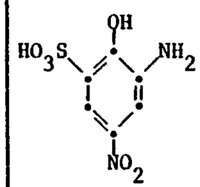 | 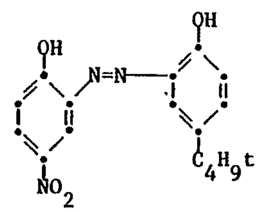 | Braun |
| 110 | do | do | 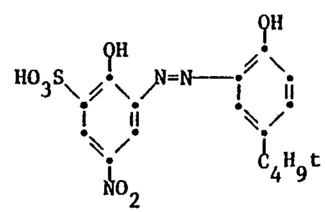 | Braun |

Färbevorschrift für Leder

100 Teile Bekleidungsveloursleder (Trockengewicht) werden bei 50 °C in einer Lösung von 1 000 Volumenteilen Wasser und 2 Teilen Ammoniak 24 %ig während 2 Stunden aufgewalkt und anschliessend bei 60° in einer Lösung von 1 000 Volumteilen Wasser, 2 Teilen Ammoniak 24 %ig und 6 Teilen Farbstoff aus Beispiel 3 während einer Stunde gefärbt. Hierauf gibt man eine Lösung von 40 Volumteilen Wasser und 4 Teilen Ameisensäure 85 %ig zu und färbt noch weitere 30 Minuten. Dann werden die Leder gut gespült und gegebenenfalls noch mit 2 Teilen eines Dicyandiamidformaldehydkondensationsproduktes während 30 Minuten bei 50° behandelt.

In gleicher Weise lassen sich andere Veloursleder sowie Handschuhleder färben.

Die so erhaltenen braunen Färbungen zeichnen sich durch allgemein gute Echtheiten und sehr gutes Deckvermögen aus.

**Ansprüche**

1. Chromkomplexfarbstoffe, die in Form der freien Säure der Formel

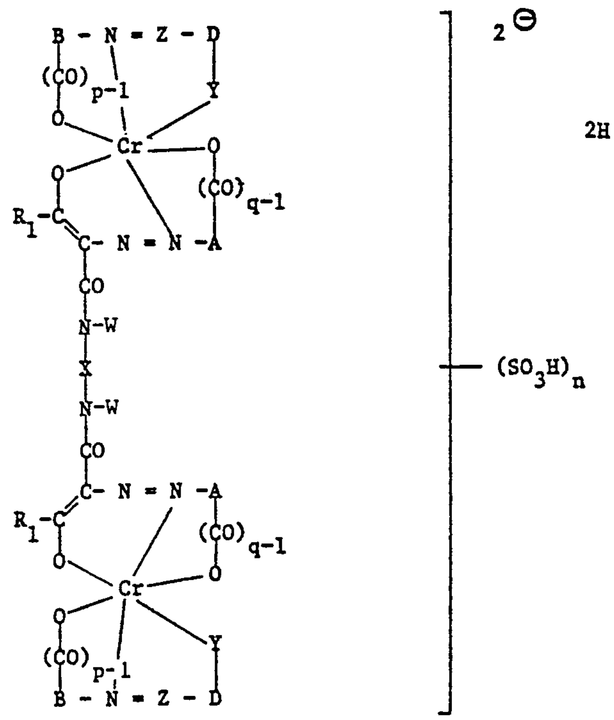

(1)

entsprechen, worin X eine direkte Bindung oder den Rest eines aliphatischen, aromatischen oder heterocyclischen Diamins, W Wasserstoff oder eine niedere Alkylgruppe, wobei die beiden Reste W auch miteinander verbunden sein können, so dass sie zusammen eine aliphatische Brücke mit 2 C-Atomen darstellen, $R_1$ je einen niedermolekularen Alkylrest, einen Arylrest oder die CN—$CH_2$-Gruppe, A unabhängig voneinander einen Rest der Benzol- oder Naphthalinreihe, B unabhängig voneinander einen Rest der Benzol- oder Naphthalinreihe, Z unabhängig voneinander ein Stickstoffatom oder eine CH-Gruppe, p unabhängig voneinander 1 oder 2, q unabhängig voneinander 1 oder 2, Y unabhängig voneinander ein Sauerstoffatom oder eine Gruppe der Formel —NR—, worin R Wasserstoff oder niedrigmolekulares Alkyl bedeutet, wobei, wenn Z eine CH-Gruppe ist, Y ein Sauerstoffatom sein muss und D unabhängig voneinander den Rest eines o-Hydroxybenzaldehyds oder o-Hydroxynaphthaldehyds bedeutet, oder, wenn Z ein Stickstoffatom ist, den Rest einer in o-Stellung zu Y kuppelnden Kupplungskomponente bedeutet, und n eine ganze Zahl von 1 bis 8 ist.

2. Chromkomplexfarbstoffe gemäss Anspruch 1 der Formel (1), worin Y ein Sauerstoffatom oder die —NH-Gruppe und Z ein Stickstoffatom bedeutet.

3. Chromkomplexfarbstoffe gemäss Anspruch 2 der Formel (1), worin D-Y der Rest eines Phenols, Naphthols, eines Naphthylamins, Pyrazolons, eines Pyrazolimins, eines Pyridons oder eines Acetessigsäureamids ist.

4. Chromkomplexe gemäss Anspruch 1 der Formel (1), worin $R_1$ je ein Methylrest ist.

5. Chromkomplexfarbstoffe gemäss Anspruch 1, worin X ein aliphatischer Rest mit 2 bis 6 C-Atomen, ein Rest der Benzol- oder Naphthalinreihe oder ein Rest der Formel

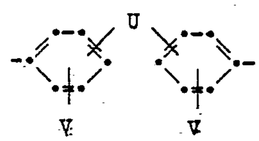

(2)

ist, worin U eine direkte Bindung, eine gegebenenfalls substituierte Methylenbrücke oder eine Brücke der Formel —O—, —S—, —NR′—, —SO—, —$SO_2$—, —CO—, —CO—CO—, —CO—NH—, —NH—CO—NH—, —NH—CS—NH—, —$SO_2$—NH—, —$SO_2$—NH—$SO_2$—, —N = N—, —$CH_2$—$CH_2$— oder —CH = CH— ist, wobei R′ Wasserstoff oder niedrigmolekulares Alkyl bedeutet und V unabhängig voneinander je Wasserstoff oder einen Substituenten bedeutet.

6. Chromkomplexe gemäss Anspruch 1, die in Form der freien Säure der Formel

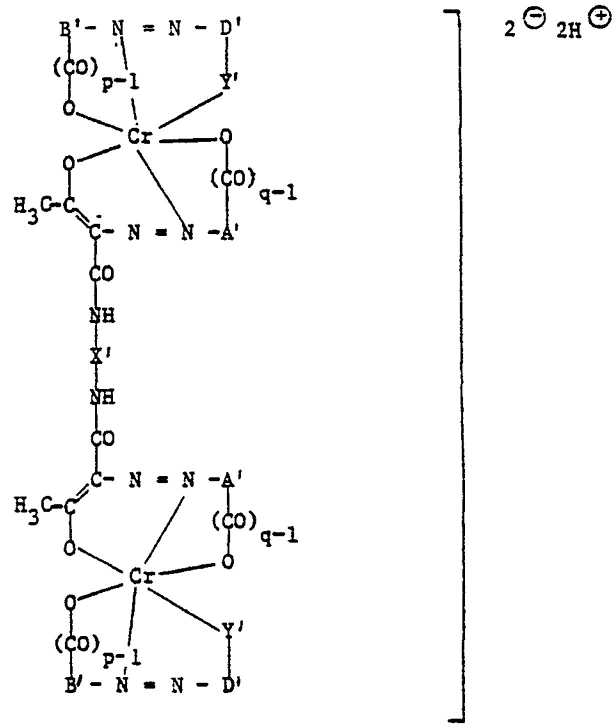

(3)

entsprechen, worin X′ ein niedrigmolekularer Alkylenrest, ein gegebenenfalls mit Chlor, Nitro, Sulfo, niedrigmolekularem Alkyl oder Alkoxy substituierter Phenylen- oder Naphthylenrest oder ein Rest der Formel

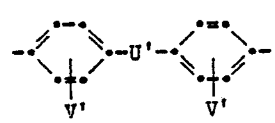

(4)

ist, worin U′ eine direkte Bindung oder ein Brückenglied der Formel

$-CH_2-$, 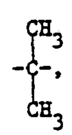, 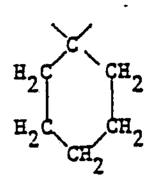

—CH = CH—, —$SO_2$—, —O— oder —$SO_2$—NH—$SO_2$— und V′ unabhängig voneinander je Wasserstoff, die Sulfogruppe, Chlor, Methyl oder Methoxy bedeutet, Y′ unabhängig voneinander ein Sauerstoffatom oder die NH-Gruppe, p und q unabhängig voneinander je 1 oder 2, A′ und B′ unabhängig voneinander je ein gegebenenfalls mit Sulfo-, Alkyl- oder Alkoxygruppen, Chlor, Nitro oder Cyano substituierter Phenyl- oder Naphthylrest und D′ unabhängig voneinander ein gegebenenfalls mit Hydroxy, Alkyl oder Alkoxy substituierter Phenylrest, ein gegebenenfalls mit Amino, Acylamino oder Sulfo substituierter Naph-

thylrest, der Rest eines 1-Aryl-3-methylpyrazol-5-ons oder der Rest eines Acetessigsäureanilids ist, wobei die beiden letztgenannten Reste mit Sulfo, Nitro, Chlor, Brom, Alkyl oder Alkoxy substituiert sein können.

7. Chromkomplexe gemäss Anspruch 6, worin X' der Rest eines gegebenenfalls mit Sulfo, Methyl oder Methoxy substituierten Phenylendiamins oder ein Rest der Formel (4) ist, worin V' je Wasserstoff oder eine Sulfogruppe bedeuten und U' eine direkte Bindung oder eine Brücke der Formel $-CH_2-$, $-C(CH_3)_2-$

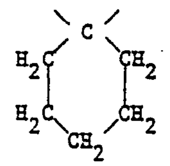

,

$-CH=CH-$, $-SO_2-$, $-O-$ oder $-SO_2-NH-SO_2$ ist.

8. Chromkomplexfarbstoffe gemäss Anspruch 6, worin A' und B' unabhängig voneinander mit Nitro oder Sulfo oder Nitro und Sulfo substituiertes Phenyl oder Naphthyl bedeutet.

9. Chromkomplexfarbstoffe gemäss Anspruch 6, worin D' ein gegebenenfalls mit Sulfo oder Amino und Sulfo substituierter Naphthylrest, ein gegebenenfalls mit niedrigmolekularem Alkyl substituierter Phenylrest oder der Rest eines im Phenylkern gegebenenfalls mit Sulfo substituierten 1-Phenyl-3-methylpyrazol-5-ons ist.

10. Chromkomplexe gemäss den Ansprüchen 1 bis 9, welche 2 bis 6 Sulfogruppen enthalten.

11. Verfahren zur Herstellung von Chromkomplexfarbstoffen gemäss Anspruch 1, dadurch gekennzeichnet, dass man einen Farbstoff der Formel

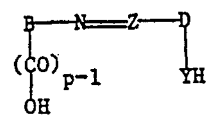

oder (5)

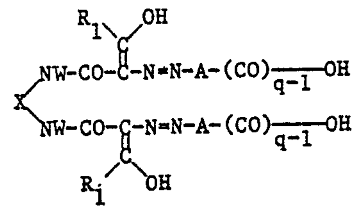

(6)

worin X, W, $R_1$, A, B, D, Z, Y, p und q dasselbe wie in Formel (1) bedeuten, mit einem chromabgebenden Mittel zum 1 : 1-Chromkomplex, bzw. im Falle der Formel (6) zum 2 Atome Chrom pro Molekül enthaltenden Chromkomplex umsetzt und diesen anschliessend mit dem nicht metallisierten Farbstoff der Formel (6) oder (5) umsetzt, wobei man die Ausgangsverbindungen so wählt, dass der Chromkomplex 1 bis 8 Sulfogruppen enthält.

12. Verfahren gemäss Anspruch 11, dadurch gekennzeichnet, dass man einen Farbstoff der Formel (5) in den 1 : 1-Chromkomplex überführt und 2 Aequivalente desselben mit einem Aequivalent eines Farbstoffes der Formel (6) umsetzt.

13. Verfahren gemäss den Ansprüchen 11 und 12, dadurch gekennzeichnet, dass man von einer Verbindung der Formel (5) ausgeht, worin Y ein Sauerstoffatom oder die -NH-Gruppe und Z ein Stickstoffatom bedeutet.

14. Verfahren gemäss den Ansprüchen 11 und 12, dadurch gekennzeichnet, dass man den 1 : 1-Chromkomplex eines Farbstoffes der Formel (5) verwendet, worin —D—YH der Rest eines Phenols, Naphthols, eines Naphthylamins, Pyrazolons, eines Pyrazolimins, eines Pyridons oder eines Acetessigsäureamids ist.

15. Verfahren gemäss den Ansprüchen 12 und 13, dadurch gekennzeichnet, dass man von einer Verbindung der Formel (6) ausgeht, worin $R_1$ je ein Methylrest ist.

16. Verfahren gemäss den Ansprüchen 11 und 12, dadurch gekennzeichnet, dass man von einer Verbindung der Formel (6) ausgeht, worin X ein aliphatischer Rest mit 2 bis 6 C-Atomen, ein Rest der Benzol- oder Naphthalinreihe oder ein Rest der Formel

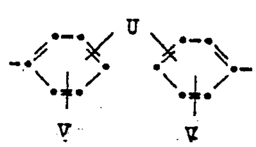

(2)

ist, worin U eine direkte Bindung, eine gegebenenfalls substituierte Methylenbrücke oder eine Brücke der Formel —O—, —S—, —NR'—, —SO—, —$SO_2$—, —CO—, —CO—CO—, —CO—NH—, —NH—CO—NH—, —NH—CS—NH—, —$SO_2$—NH—, —$SO_2$—NH—$SO_2$—, —N = N—, —$CH_2$—$CH_2$— oder —CH = CH— ist, wobei R' Wasserstoff oder niedrigmolekulares Alkyl bedeutet und V unabhängig voneinander je Wasserstoff oder einen Substituenten bedeutet.

17. Verfahren gemäss den Ansprüchen 11 und 12, dadurch gekennzeichnet, dass man 2 Aequivalente eines 1 : 1-Chromkomplexes eines Farbstoffes der Formel

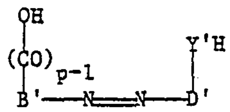 (7)

mit einem Aequivalent eines Farbstoffs der Formel

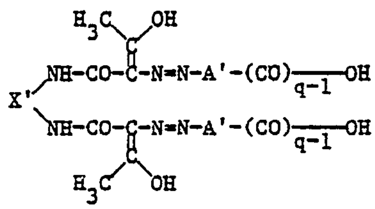 (8)

umsetzt, worin X' ein niedrigmolekularer Alkylenrest, ein gegebenenfalls mit Chlor, Nitro, Sulfo, niedrigmolekularem Alkyl und Alkoxy substituierter Phenylen- oder Naphthylenrest oder ein Rest der Formel

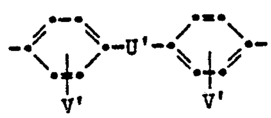 (4)

ist, worin U' eine direkte Bindung oder ein Brückenglied der Formel

$-CH_2-$, 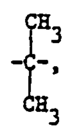, 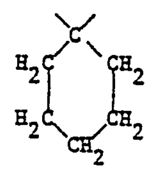

—CH = CH—, —$SO_2$—, —O— oder —$SO_2$—NH—$SO_2$— und V' unabhängig voneinander je Wasserstoff, die Sulfogruppe, Chlor, Methyl oder Methoxy bedeutet, Y' unabhängig voneinander ein Sauerstoffatom oder die NH-Gruppe, p und q unabhängig voneinander je 1 oder 2, A' und B' unabhängig voneinander je ein gegebenenfalls mit Sulfo-, Alkyl- oder Alkoxygruppen, Chlor, Nitro oder Cyano substituierter Phenyl- oder Naphthylrest und D' unabhängig voneinander ein gegebenenfalls mit Hydroxy, Alkyl oder Alkoxy substituierter Phenylrest, ein gegebenenfalls mit Amino, Acylamino oder Sulfo substituierter Naphthylrest, der Rest eines 1-Aryl-3-methylpyrazol-5-ons oder der Rest eines Acetessigsäureanilids ist, wobei die beiden letztgenannten Reste mit Sulfo, Nitro, Chlor, Brom, Alkyl oder Alkoxy substituiert sein können.

18. Verfahren gemäss Anspruch 17, dadurch gekennzeichnet, dass man von einer Verbindung der Formel (8) ausgeht, worin X' der Rest eines gegebenenfalls mit Sulfo, Methyl oder Methoxy substituierten Phenylendiamins oder ein Rest der Formel (4) ist, worin V' je Wasserstoff oder eine Sulfogruppe bedeuten und U' eine direkte Bindung, oder eine Brücke der Formel —$CH_2$—, —$C(CH_3)_2$—

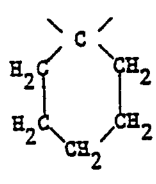,

—CH = CH—, —$SO_2$—, —O— oder —$SO_2$—NH—$SO_2$ ist.

19. Verfahren zum Färben und Bedrucken von Polyamid oder Cellulosematerial unter Verwendung der gemäss den Ansprüchen 1 bis 10 definierten, bzw. gemäss den Ansprüchen 11 bis 18 erhaltenen Farbstoffe.

20. Verfahren gemäss Anspruch 19, dadurch gekennzeichnet, dass Leder gefärbt wird.

**Claims**

1. A chrome-complex dye which, in the form of the free acid, corresponds to the formula

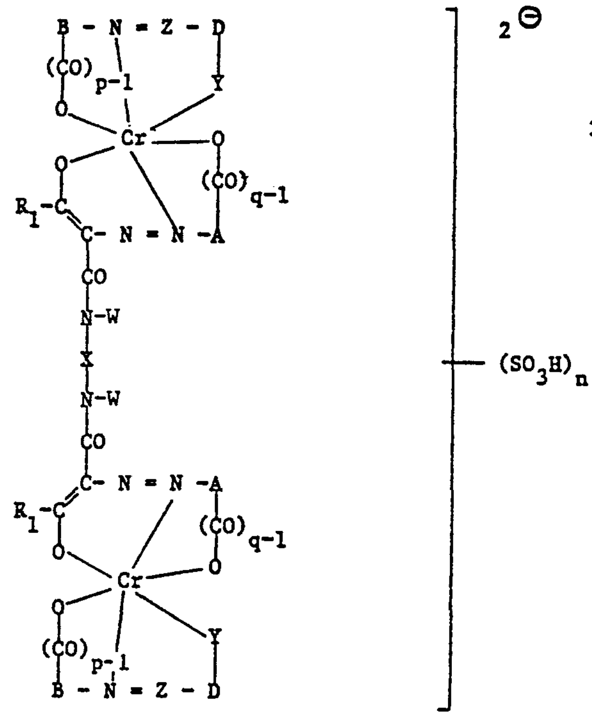

(1)

wherein X is a direct bond or the radical of an aliphatic, aromatic or heterocyclic diamine, W is hydrogen or a lower alkyl group, and the two radicals W can also be bound to one another so that together they form an aliphatic bridge having 2 C atoms, each $R_1$ is a low-molecular alkyl group, an aryl group or the CN—$CH_2$ group, the A s independently of one another are each a radical of the benzene or naphthalene series, the B s independently of one another are each a radical of the benzene or naphthalene series, the Z s independently of one another are each a nitrogen atom or a CH group, the p s independently of one another are each 1 or 2, the q s independently of one another are each 1 or 2, the Y s independently of one another are each an oxygen atom or a group of the formula —NR—, wherein R is hydrogen or low-molecular alkyl, and when Z is a CH group, Y has to be an oxygen atom and the D s independently of one another are each the radical of an o-hydroxybenzaldehyde or o-hydroxynaphthaldehyde, or, when Z is a nitrogen atom, they are each the radical of a coupling component coupling in the o-position with respect to Y, and n is an integer from 1 to 8 inclusive.

2. A chrome-complex dye of the formula (1) according to Claim 1, wherein Y is an oxygen atom or the NH group, and Z is a nitrogen atom.

3. A chrome-complex dye of the formula (1) according to Claim 2, wherein D-Y is the radical of a phenol, of a naphthol, naphthylamine, pyrazolone, pyrazoleimine or pyridone or of an acetoacetic acid amide.

4. A chrome-complex dye of the formula (1) according to Claim 1, wherein each $R_1$ is a methyl group.

5. A chrome-complex dye according to Claim 1, wherein X is an aliphatic radical having 2 to 6 C atoms, a radical of the benzene or naphthalene series or a radical of the formula

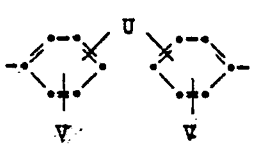

(2)

wherein U is a direct bond, an unsubstituted or substituted methylene bridge, or a bridge of the formula —O—, —S—, —NR'—, —SO—, $—SO_2—$, —CO—, —CO—CO—, —CO—NH—, —NH—CO—NH—, —NH—CS—NH—, $—SO_2—NH—$, $—SO_2—NH—SO_2—$, —N = N—, $—CH_2CH_2—$ or —CH = CH—, wherein R' is hydrogen or low-molecular alkyl, and the V s independently of one another are each hydrogen or a substituent.

6. A chrome-complex dye according to Claim 1 which, in the form of the free acid, corresponds to the formula

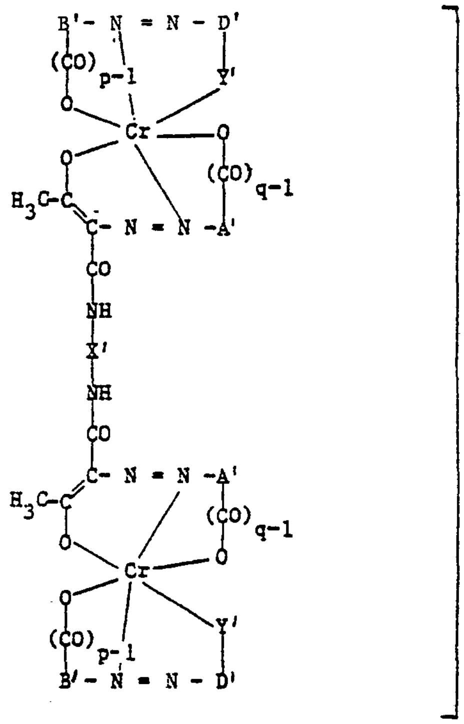

$2^{\ominus}$ $2H^{\oplus}$ (3)

wherein X' is a low-molecular alkylene group, a phenylene or naphthylene group which is unsubstituted or substituted by chlorine, nitro, sulfo, low-molecular alkyl or alkoxy, or X' is a radical of the formula

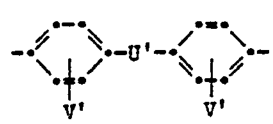

(4)

wherein U' is a direct bond or a bridge member of the formula

$-CH_2-$, 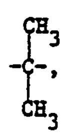 , 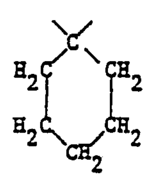

—CH = CH—, $—SO_2—$, —O— or $—SO_2—NH—SO_2—$, and the V' s independently of one another are each hydrogen, the sulfo group, chlorine, methyl or methoxy, the Y' s independently of one another are each an oxygen atom or the NH group, p and q independently of another are each 1 or 2, A' and B' independently of one another are each a phenyl or naphthyl group which is unsubstituted or substituted by sulfo, alkyl or alkoxy groups, or by chlorine, nitro or cyano, and the D' s independently of one another are each a phenyl group which is unsubstituted or substituted by hydroxyl, alkyl or alkoxy, or are each a naphthyl group which is unsubstituted or substituted by amino, acylamino or sulfo, or are each the radical of a 1-aryl-3-methylpyrazol-5-one, or the radical of an acetoacetic acid anilide, the two last-mentioned radicals being able to be substituted by sulfo, nitro, chlorine, bromine, alkyl or alkoxy.

7. A chrome-complex dye according to Claim 6, wherein X' is the radical of a phenylenediamine which is unsubstituted or substituted by sulfo, methyl or methoxy, or it is a radical of the formula (4)

wherein each V' is hydrogen or a sulfo group, and U' is a direct bond, or a bridge member of the formula $-CH_2-$, $-C(CH_3)_2-$,

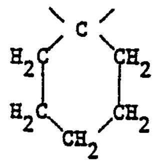,

$-CH=CH-$, $-SO_2-$, $-O-$ or $-SO_2-NH-SO_2$.

8. A chrome-complex dye according to Claim 6, wherein A' and B' independently of one another are each phenyl or naphthyl each substituted by nitro or sulfo or by nitro and sulfo.

9. A chrome-complex dye according to Claim 6, wherein D' is a naphthyl group which is unsubstituted or substituted by sulfo or by amino and sulfo, or it is a phenyl group which is unsubstituted or substituted by low-molecular alkyl, or it is the radical of a 1-phenyl-3-methyl-pyrazol-5-one which is unsubstituted or substituted in the phenyl nucleus by sulfo.

10. A chrome-complex dye according to Claims 1 to 9 inclusive, which contains 2 to 6 sulfo groups.

11. A process for producing a chrome-complex dye according to Claim 1, which process comprises reacting a dye of the formula

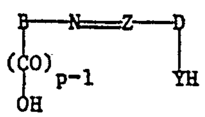 and (5)

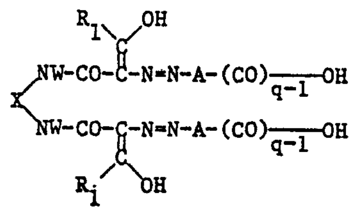 (6)

wherein X, W, $R_1$, A, B, D, Z, Y, p and q have the same meanings as in the formula (1), with a chromium-releasing agent to give the 1 : 1-chrome complex in the case of the formula (5), and the chrome-complex containing 2 atoms of chromium per molecule in the case of the formula (6), respectively; and subsequently reacting the resulting chrome complexes with the non-metallised dye of the formulae (6) and (5), respectively, the starting compounds being so chosen that the chrome complex contains 1 to 8 sulfo groups.

12. A process according to Claim 11, wherein a dye of the formula (5) is converted into the 1 : 1-chrome complex, and 2 equivalents of this are reacted with 1 equivalent of a dye of the formula (6).

13. A process according to Claims 11 and 12, wherein the starting product is a compound of the formula (5) in which Y is an oxygen atom or the $-NH-$ group, and Z is a nitrogen atom.

14. A process according to Claims 11 and 12, wherein there is used the 1 : 1-chrome complex of a dye of the formula (5) in which $-D-YH$ is the radical of a phenol or naphthol, or of a napthylamine, pyrazolone, pyrazolimine or pyridone or of an acetoacetic acid amide.

15. A process according to Claims 12 and 13, wherein the starting product is a compound of the formula (6) in which each $R_1$ is a methyl group.

16. A process according to Claims 11 and 12, wherein the starting product is a compound of the formula (6) in which X is an aliphatic radical having 2 to 6 C atoms, a radical of the benzene or naphthalene series or a radical of the formula

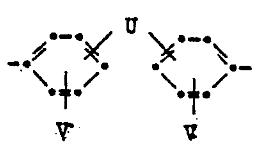 (2)

wherein U is a direct bond, an unsubstituted or substituted methylene bridge, or a bridge of the formula $-O-$, $-S-$, $-NR'-$, $-SO-$, $-SO_2-$, $-CO-$, $-CO-CO-$, $-CO-NH-$, $-NH-CO-NH-$, $-NH-CS-NH-$, $-SO_2-NH-$, $-SO_2-NH-SO_2$, $N=N-$, $-CH_2-CH_2-$ or $-CH=CH-$, wherein R' is hydrogen or low-molecular alkyl, and the V s independently of one another are each hydrogen or a substituent.

17. A process according to Claims 11 and 12, wherein 2 equivalents of a 1 : 1-chrome complex of a dye of the formula

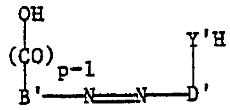

(7)

are reacted with 1 equivalent of a dye of the formula

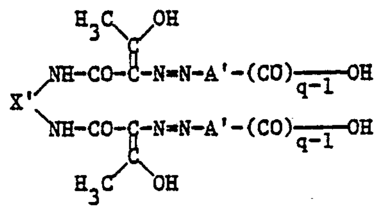

(8)

wherein X′ is a low-molecular alkylene group, a phenylene or naphthalene group each of which is unsubstituted or substituted by chlorine, nitro, sulfo, low-molecular alkyl or alkoxy, or X′ is a radical of the formula

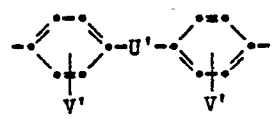

(4)

wherein U′ is a direct bond or a bridge member of the formula

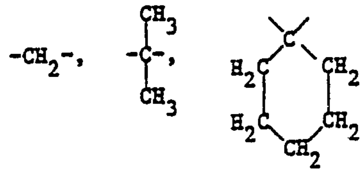

—CH = CH—, $—SO_2—$, —O— or $—SO_2—NH—SO_2—$, and the V′ s independently of one another are each hydrogen, the sulfo group, chlorine, methyl or methoxy, the Y′ s independently of one another are each an oxygen atom or the NH group, p and q independently of one another are each 1 or 2, A′ and B′ independently of one another are each a phenyl or naphthyl group each of which is unsubstituted or substituted by sulfo, alkyl or alkoxy groups, by chlorine, nitro or cyano, and the D′ s independently of one another are each a phenyl group which is unsubstituted or substituted by hydroxyl, alkyl or alkoxy, or they are each a naphthyl group which is unsubstituted or substituted by amino, acylamino or sulfo, or they are each the radical of a 1-aryl-3-methylpyrazol-5-one or the radical of an acetoacetic acid anilide, the two last-mentioned being able to be substituted by sulfo, nitro, chlorine, bromine, alkyl or alkoxy.

18. A process according to Claim 17, wherein the starting product is a compound of the formula (8) in which X′ is the radical of a phenylenediamine which is unsubstituted or substituted by sulfo, methyl or methoxy, or it is a radical of the formula (4) in which each V′ is hydrogen or a sulfo group, and U′ is a direct bond, or a bridge member of the formula $—CH_2—$, $—C(CH_3)_2—$,

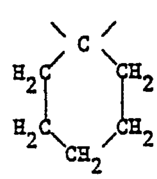

,

—CH = CH—, $—SO_2—$, —O— or $—SO_2—NH—SO_2$.

19. A process for dyeing and printing polyamide or cellulose materials by use of the dyes defined according to Claims 1 to 10 inclusive, and obtained according to Claims 11 to 18 inclusive.

20. A process according to Claim 19, wherein the material dyed is leather.

## Revendications

1. Colorants complexes de chrome qui, à l'état d'acide libre, correspondent à la formule :

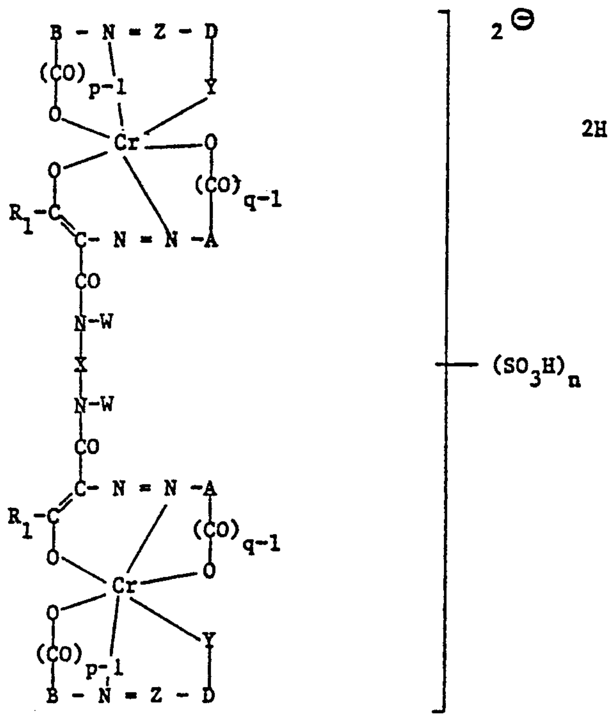

(1)

dans laquelle X est une liaison directe ou bien le reste d'une diamine aliphatique, aromatique ou hétérocyclique ; W est de l'hydrogène ou un groupe alkyle inférieur, les deux restes W pouvant être liés également entre eux de façon telle, qu'ils représentent ensemble un pont aliphatique avec deux atomes de carbone ; chaque $R_1$ représente un reste alkyle à bas poids moléculaire, un reste aryle ou le groupe $CN-CH_2$ ; chaque A indépendamment l'un de l'autre est un reste de la série benzénique ou naphtalénique ; chaque B indépendamment l'un de l'autre est un reste de la série benzénique ou naphtalénique ; chaque Z indépendamment l'un de l'autre est un atome d'azote ou un groupe CH ; chaque p indépendamment l'un de l'autre vaut 1 ou 2 ; chaque q indépendamment l'un de l'autre vaut 1 ou 2 ; chaque Y indépendamment l'un de l'autre est un atome d'oxygène ou un groupe de formule —NR— dans laquelle R est de l'hydrogène ou un groupe alkyle à bas poids moléculaire, étant donné que si Z est un groupe CH, Y doit être un atome d'oxygène et chaque D indépendamment l'un de l'autre est le reste d'un o-hydroxybenzaldéhyde ou d'un o-hydroxynaphtaldéhyde, ou bien quand Z est un atome d'azote, D représente le reste d'un constituant de copulation copulant en position o- par rapport à Y, et n est un nombre entier de 1 à 8.

2. Colorants complexes de chrome selon la revendication 1, ayant la formule (1), dans laquelle Y est un atome d'oxygène ou bien le groupe —NH, et Z est un atome d'azote.

3. Colorants complexes de chrome selon la revendication 2, de formule (1), dans laquelle D-Y est le reste d'un phénol, d'un naphtol, d'une naphtylamine, d'une pyrazolone, d'une pyrazolimine, d'une pyridone ou d'un acéto-acétylamide.

4. Complexes de chrome selon la revendication 1, de formule (1), dans laquelle chaque $R_1$ est un reste méthyle.

5. Colorants complexes de chrome selon la revendication 1, dans laquelle X est un reste aliphatique avec 2 à 6 atomes de carbone, un reste de la série benzénique ou naphtalénique, ou bien un reste de formule :

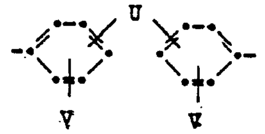

(2)

dans laquelle U est une liaison directe, un pont méthylène éventuellement substitué, ou bien un pont de formule —O—, —S—, —NR'—, —SO—, —$SO_2$—, —CO—, —CO—CO—, —CO—NH—, —NH—CO—NH—, —NH—CS—NH, —$SO_2$—NH—, —$SO_2$—NH—$SO_2$—, —N = N—, —$CH_2$—$CH_2$— ou —CH = CH—, R' étant de l'hydrogène ou un reste alkyle à bas poids moléculaire, et chaque V indépendamment l'un de l'autre, désigne de l'hydrogène ou un substituant.

6. Complexes de chrome selon la revendication 1, qui, à l'état d'acide libre, correspondent à la formule :

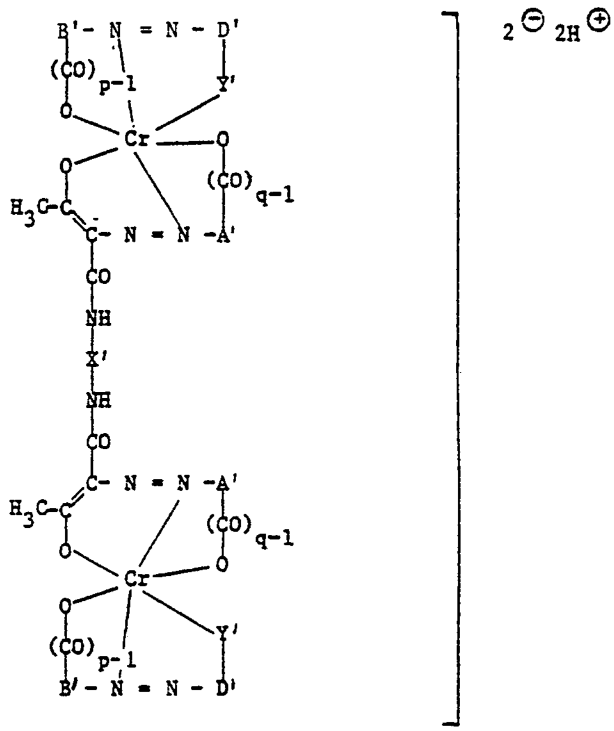

(3)

dans laquelle X' est un reste alkylène à bas poids moléculaire, un reste phénylène ou naphtylène éventuellement substitué par les radicaux chloro, nitro, sulfo, alkyle ou alcoxy à bas poids moléculaire, ou bien un reste de formule :

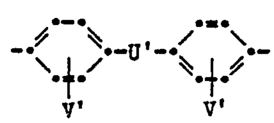

(4)

dans laquelle U' est une liaison directe ou bien un chaînon pontal de formule :

$-CH_2-$, 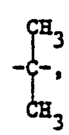 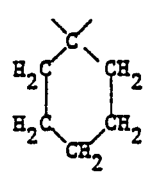

—CH = CH—, —$SO_2$—, —O— ou —$SO_2$—NH—$SO_2$— et chaque V' indépendamment l'un de l'autre représente de l'hydrogène, le groupe sulfo, du chlore, le groupe méthyle ou méthoxy, chaque Y' indépendamment l'un de l'autre désigne un atome d'oxygène ou le groupe NH ; chaque p et chaque q indépendamment l'un de l'autre vaut 1 ou 2 ; chaque A' et B' indépendamment l'un de l'autre représente un reste phényle ou naphtyle éventuellement substitué par les radicaux sulfo, alkyle ou alcoxy, chloro, nitro ou cyano, et chaque D' indépendamment l'un de l'autre, représente un reste phényle éventuellement substitué par les radicaux hydroxyle, alkyle ou alcoxy, un reste naphtyle éventuellement substitué par les radicaux amino, acylamino ou sulfo, le reste d'une 1-aryl-3-méthylpyrazol-5-one ou le reste d'un acéto-acétylanilide, les deux derniers restes mentionnés pouvant être substitués par les radicaux sulfo, nitro, chloro, bromo, alkyle ou alcoxy.

7. Complexes de chrome selon la revendication 6, dans lesquels X' est le reste d'une phénylènediamine éventuellement substituée par les radicaux sulfo, méthyle ou méthoxy, ou bien un reste de formule (4), où chaque V' représente de l'hydrogène ou un groupe sulfo, et U' est une liaison directe ou un pont de formule : $—CH_2—$, $—C(CH_3)_2—$

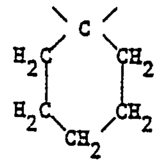 ,

$—CH = CH—$, $—SO_2—$, $—O—$ ou $—SO_2—NH—SO_2$

8. Colorants complexes de chrome selon la revendication 6, dans lesquels chaque A' et chaque B' indépendamment l'un de l'autre représente un reste phényle ou naphtyle substitué par les radicaux nitro ou sulfo, ou nitro et sulfo.

9. Colorants complexes de chrome selon la revendication 6, dans lesquels D' est un reste naphtyle éventuellement substitué par les radicaux sulfo, ou amino et sulfo, un reste phényle éventuellement substitué par un radical alkyle à bas poids moléculaire ou bien le reste d'une 1-phényl-3-méthylpyrazol-5-one éventuellement substitué par le radical sulfo sur le noyau phényle.

10. Complexes de chrome selon les revendications 1 à 9, qui contiennent 2 à 6 groupes sulfo.

11. Procédé pour la préparation de colorants complexes de chrome selon la revendication 1, caractérisé par le fait qu'on fait réagir un colorant de formule :

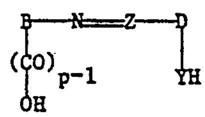 ou (5)

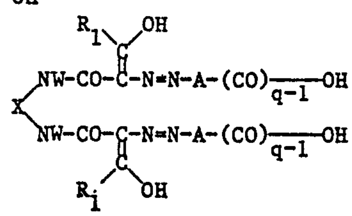 (6)

dans lesquelles X, W, $R_1$, A, B, D, Z, Y, p et q sont les mêmes que dans la formule (1), avec un agent cédant du chrome pour avoir un complexe de chrome 1 : 1, ou bien, dans le cas de la formule (6), pour avoir un complexe de chrome contenant 2 atomes de chrome par molécule, puis on fait réagir ce complexe avec le colorant non métallifère de formules (6) ou (5), étant donné qu'on choisit les composés de départ de façon à ce que le complexe de chrome contienne 1 à 8 groupes sulfo.

12. Procédé selon la revendication 11, caractérisé par le fait qu'on transforme un colorant de formule (5) en complexe de chrome 1 : 1 et qu'on fait réagir deux équivalents de ce complexe avec un équivalent d'un colorant de formule (6).

13. Procédé selon les revendications 11 et 12, caractérisé par le fait qu'on part d'un composé de formule (5) dans lequel Y est un atome d'oxygène ou bien le groupe —NH et Z est un atome d'azote.

14. Procédé selon les revendications 11 et 12, caractérisé par le fait qu'on utilise le complexe de chrome 1 : 1 d'un colorant de formule (5), dans lequel —D—YH est le reste d'un phénol, d'un naphtol, d'une naphtylamine, d'une pyrozolone, d'une pyrazolimine, d'une pyridone ou d'un acéto-acétylamide.

15. Procédé selon les revendications 12 et 13, caractérisé par le fait qu'on part d'un composé de formule (6) dans lequel chaque $R_1$ est un reste méthyle.

16. Procédé selon les revendications 11 et 12, caractérisé par le fait qu'on part d'un composé de formule (6), dans lequel X est un reste aliphatique avec 2 à 6 atomes de carbone, un reste de la série benzénique ou naphtalénique ou bien un reste de formule :

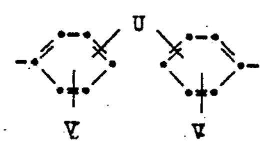 (2)

dans laquelle U est une liaison directe, un pont méthylène éventuellement substitué ou bien un point de formule —O—, —S—, —NR'—, —SO—, $—SO_2—$, —CO—, —CO—CO—, —CO—NH—, —NH—CO—NH—, —NH—CS—NH—, $—SO_2—NH—$, $—SO_2—NH—SO_2—$, —N = N—, $—CH_2—CH_2—$ ou —CH = CH—, R'

étant de l'hydrogène ou un groupe alkyle à bas poids moléculaire, et chaque V indépendamment l'un de l'autre, représente de l'hydrogène ou un substituant.

17. Procédé selon les revendications 11 et 12, caractérisé par le fait qu'on fait réagir deux équivalents d'un complexe de chrome 1 : 1 d'un colorant de formule :

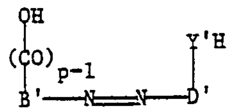

(7)

avec un équivalent d'un colorant de formule :

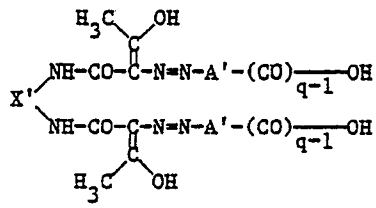

(8)

dans lesquelles X' est un reste alkylène à bas poids moléculaire, un reste phénylène ou naphtylène éventuellement substitué par les radicaux chloro, nitro, sulfo, alkyle et alcoxy à bas poids moléculaire, ou bien un reste de formule :

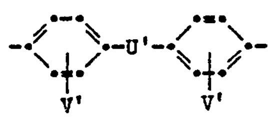

(4)

dans laquelle U' est une liaison directe, ou un chaînon pontal de formule :

$-CH_2-$, 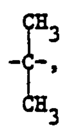 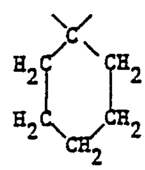

$-CH=CH-$, $-SO_2-$, $-O-$ ou $-SO_2-NH-SO_2-$ et chaque V' indépendamment l'un de l'autre, désigne de l'hydrogène, le groupe sulfo, chloro, méthyle ou méthoxy ; chaque Y' indépendamment l'un de l'autre est un atome d'oxygène ou le groupe NH ; chaque p et q indépendamment l'un de l'autre vaut 1 ou 2 ; chaque A' et chaque B' indépendamment l'un de l'autre désigne un reste phényle ou naphtyle éventuellement substitué par les radicaux sulfo, alkyle ou alcoxy, chloro, nitro ou cyano, et chaque D' indépendamment l'un de l'autre désigne un reste phényle éventuellement substitué par les radicaux hydroxyle, alkyle ou alcoxy, un reste naphtyle éventuellement substitué par les radicaux amino, acylamino ou sulfo, le reste d'une 1-aryl-3-méthylpyrazol-5-one ou le reste d'un acétylacétanilide, les deux derniers restes mentionnés pouvant être substitués par les radicaux sulfo, nitro, chloro, bromo, alkyle ou alcoxy.

18. Procédé selon la revendication 17, caractérisé par le fait qu'on part d'un composé de formule (8) dans laquelle X' est le reste d'une phénylènediamine éventuellement substituée par les radicaux sulfo, méthyle ou méthoxy, ou bien un reste de formule (4), où chaque V' est de l'hydrogène ou un groupe sulfo et U' est une liaison directe ou bien un pont de formule :

$-CH_2-$, $-C(CH_3)_2-$

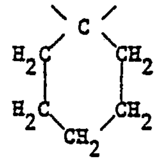 ,

$-CH=CH-$, $-SO_2-$, $-O-$ ou $-SO_2-NH-SO_2$

19. Procédé pour teindre et imprimer des matériaux en polyamide ou en cellulose en utilisant les colorants définis selon les revendications 1 à 10, ou obtenus selon les revendications 11 à 18.

20. Procédé selon la revendication 19, caractérisé par le fait que le cuir est teint.